# EUROPEAN PATENT APPLICATION

(11) **EP 4 845 265 A1**
(43) Date of publication of application: **25.11.2026**
(21) Application number: 25751512.2
(22) Date of filing: 05.02.2025
(51) Int. Cl.: H04W 72/0446

(54) **COMMUNICATION METHOD AND APPARATUS**

(30) Priority: 07.02.2024 CN 202410175910
(71) Applicant: Huawei Technologies Co., Ltd., Shenzhen, Guangdong 518129 (CN)
(72) Inventor: CHEN, Ying, Shenzhen, Guangdong 518129 (CN); ZHANG, Jiayin, Shenzhen, Guangdong 518129 (CN)
(74) Representative: Huawei European IPR
(86) International application number: PCT/CN2025/075795
(87) International publication number: WO 2025/167913

(57) **Abstract**

This application provides a communication method and apparatus to resolve the mismatch between the conflict situation of a terminal device and that perceived by a network device, and relates to the field of wireless communication technologies. In the method, the terminal device determines, based on a reported first timing advance value, a first time unit that is considered by the network device and in which uplink transmission and downlink reception overlap; and determines, based on a second timing advance value, a second time unit in which uplink transmission and downlink reception of the terminal device actually overlap. Accordingly, the terminal device can cancel the uplink transmission or the downlink reception in the first time unit, and can cancel the uplink transmission or the downlink reception in the second time unit. In other words, when the conflict situation of the terminal device does not match that perceived by the network device, both transmission on the resource considered conflicting by the network device and transmission on the resource actually conflicting at the terminal device are canceled. This prevents the network device from scheduling the considered conflicting resource to another terminal device, thereby improving communication performance.

## Description

### CROSS-REFERENCE TO RELATED APPLICATIONS

This application claims priority to Chinese Patent Application No. 202410175910.7, filed with the China National Intellectual Property Administration on February 7, 2024 and entitled "COMMUNICATION METHOD AND APPARATUS", which is incorporated herein by reference in its entirety.

### TECHNICAL FIELD

This application relates to the field of wireless communication technologies, and in particular, to a communication method and apparatus.

### BACKGROUND

With the development of information technologies, more urgent requirements are imposed on efficiency, mobility, diversity, and other aspects of communication. Currently, satellites play an indispensable role in some important fields, such as space communication, aeronautical communication, maritime communication, and military communication.

Compared with terrestrial mobile networks, satellite communication can achieve wide area coverage or even global coverage by using high-, medium-, and low-orbit satellites, and can provide uniform communication services for users worldwide. A satellite communication system and a 5th generation (5th generation, 5G) communication system are integrated to complement each other, to jointly form an integrated communication network with seamless global coverage across sea, land, air, and space, thereby meeting various ubiquitous service requirements of users. This is an important direction for future communication development.

A distinct characteristic of satellite communication is its large round-trip transmission delay. Terminal devices need to frequently perform beam switching and cell handover due to movement of satellites, further increasing the communication delay. Therefore, integration of satellite communication and 5G requires enhancement of the current 5G protocol to adapt to satellite communication. In addition, satellite communication must support terminal devices with different capabilities. One such type is a half-duplex terminal device, meaning that the terminal device cannot simultaneously perform uplink transmission and downlink reception.

For half-duplex terminal devices, the 5G protocol defines some rules to indicate how to handle conflicts between uplink transmission and downlink reception. However, the rules defined in the 5G protocol are designed for terrestrial communication, where the communication delay is relatively short. In satellite communication scenarios with significantly large transmission delay, a mismatch may occur between the conflict situation experienced by the terminal device and that perceived by the network device.

### SUMMARY

This application provides a communication method and apparatus to resolve the mismatch between the conflict situation of a terminal device and that perceived by a network device, thereby improving transmission performance.

According to a first aspect, a communication method and apparatus are provided. The method may be applied to a terminal device side, for example, a terminal device or a communication module in the terminal device, or a circuit or a chip (for example, a modem (Modem) chip, also referred to as a baseband (baseband) chip, or a system on chip (System on Chip, SoC) chip or a system in package (System in Package) SiP chip including a modem core) responsible for a communication function in the terminal device. An example in which the method is applied to the terminal device is used. In the method, the terminal device determines, based on a first timing advance value, a first time unit in which uplink transmission and downlink reception overlap, and determines, based on a second timing advance value, a second time unit in which uplink transmission and downlink reception overlap. The first timing advance value is a reported timing advance value, and the first time unit and the second time unit do not overlap. The terminal device cancels the uplink transmission in the first time unit and the uplink transmission in the second time unit according to a preset rule. Alternatively, the terminal device cancels the uplink transmission in the first time unit and the downlink reception in the second time unit according to a preset rule. Alternatively, the terminal device cancels the downlink reception in the first time unit and the uplink transmission in the second time unit according to a preset rule. Alternatively, the terminal device cancels the downlink reception in the first time unit and the downlink reception in the second time unit according to a preset rule.

According to the foregoing solution, the terminal device can determine, based on the reported first timing advance value, the first time unit that is considered by a network device and in which uplink transmission and downlink reception overlap; and determine, based on the second timing advance value, the second time unit in which uplink transmission and downlink reception of the terminal device actually overlap. Accordingly, the terminal device can cancel the uplink transmission or the downlink reception in the first time unit, and can cancel the uplink transmission or the downlink reception in the second time unit. In other words, when the conflict situation of the terminal device does not match that perceived by the network device, both transmission on the resource considered conflicting by the network device and transmission on the resource actually conflicting at the terminal device are canceled. This prevents the network device from scheduling the considered conflicting resource to another terminal device, thereby improving communication performance.

It should be noted that a time unit in embodiments of this application may be a slot, a symbol, a subframe, repetition, or the like. In addition, canceling the uplink transmission may be canceling the entire uplink transmission, or may be canceling a part of the uplink transmission. For example, canceling semi-persistently scheduled uplink transmission in the first time unit may be canceling all uplink transmission in the first time unit, or may be canceling uplink transmission in some time units included in the first time unit, for example, canceling uplink transmission of some slots, some symbols, some subframes, or some repetition that overlaps downlink reception. Similarly, for canceling the downlink reception, refer to the implementation of canceling the uplink transmission. Details are not described in this application.

Optionally, in this embodiment of this application, the overlap between the uplink transmission and the downlink reception includes that a time unit used for the uplink transmission and a time unit used for the downlink reception partially or completely overlap. In this embodiment of this application, that the uplink transmission and the downlink reception overlap further includes that a time interval between the uplink transmission and the downlink reception is less than *N*_{Rx-Tx}. In this embodiment of this application, that the uplink transmission and the downlink reception overlap further includes that a time interval between the downlink reception and the uplink transmission is less than *N*_{Tx-Rx}.

In a possible implementation, canceling the downlink reception in the first time unit or canceling the uplink transmission in the first time unit is determined based on a priority of the downlink reception in the first time unit and a priority of the uplink transmission in the first time unit; and/or canceling the downlink reception in the second time unit or canceling the uplink transmission in the second time unit is determined based on a priority of the downlink reception in the second time unit and a priority of the uplink transmission in the second time unit.

According to the foregoing solution, the uplink transmission or the downlink reception that has a lower priority in the first time unit and the second time unit can be canceled based on the priority of the uplink transmission and the priority of the downlink reception.

In a possible implementation, the priorities are determined based on a scheduling mode, and the scheduling mode includes at least two of the following: dynamic scheduling, higher layer signaling configuration, or semi-persistent scheduling. For example, a priority of the dynamic scheduling is higher than a priority of the semi-persistent scheduling, or is higher than a priority of the higher layer signaling configuration.

According to the foregoing solution, the terminal device can determine the priority of the uplink transmission and the priority of the downlink reception based on a scheduling mode of the uplink transmission and a scheduling mode of the downlink reception.

In a possible implementation, a priority of synchronization signal block (synchronization signal physical broadcast channel, SSB) reception is higher than one or more of a priority of dynamically scheduled uplink transmission, a priority of semi-persistently scheduled uplink transmission, or a priority of higher layer signaling-configured uplink transmission.

According to the foregoing solution, when the SSB reception overlaps one or more of the dynamically scheduled uplink transmission, the semi-persistently scheduled uplink transmission, or the higher layer signaling-configured uplink transmission, the terminal device can preferentially perform the SSB reception. In this way, the terminal device can update channel information more quickly.

In a possible implementation, a third time unit is determined based on a first timing advance range, where the first timing advance range is determined based on the first timing advance value. The third time unit includes a plurality of first time units, or the third time unit includes one or more first time units and a non-overlapping time unit. The method further includes: canceling the uplink transmission in the second time unit or canceling the downlink reception in the second time unit according to the preset rule.

According to the foregoing solution, as a transmission delay of satellite communication is large, the first timing advance value reported by the terminal device may have an error. Therefore, the terminal device can determine the first timing advance range based on the first timing advance value, and determine the third time unit based on the first timing advance range. When the third time unit includes the plurality of first time units, that is, when the network device considers that the downlink reception and the uplink transmission of the terminal device certainly conflict, the terminal device can cancel the downlink reception or the uplink transmission in the first time unit and the downlink reception or the uplink transmission in the second time unit. This prevents the network device from scheduling the first time unit to another terminal device, thereby improving data transmission performance. When the third time unit includes one or more first time units and the non-overlapping time unit, that is, when the network device considers that the downlink reception and the uplink transmission of the terminal device may conflict, the uplink transmission or the downlink reception in the second time unit is canceled. Therefore, when the network device attempts to perform downlink sending or uplink reception in the first time unit, the network device can receive uplink data sent by the terminal device, or the terminal device can receive downlink data sent by the network device, thereby improving data transmission performance.

In a possible implementation, the preset rule includes: when dynamic scheduling and semi-persistent scheduling overlap, canceling the semi-persistent scheduling; or when dynamic scheduling and higher layer signaling configuration overlap, canceling the higher layer signaling configuration; or when higher layer signaling configuration and semi-persistent scheduling overlap, canceling the higher layer signaling configuration. In a possible implementation, the preset rule includes: when SSB reception overlaps one or more of dynamically scheduled uplink transmission, semi-persistently scheduled uplink transmission, or higher layer signaling-configured uplink transmission, canceling one or more of the dynamically scheduled uplink transmission, the semi-persistently scheduled uplink transmission, or the higher layer signaling-configured uplink transmission.

According to the foregoing solution, the terminal device can cancel the uplink transmission or the downlink reception in the first time unit, and cancel the uplink transmission or the downlink reception in the second time unit according to the preset rule.

In a possible implementation, the terminal device receives first indication information. The first indication information includes the preset rule, and the preset rule is that when semi-persistently scheduled downlink reception conflicts with semi-persistently scheduled uplink transmission, the semi-persistently scheduled downlink reception or the semi-persistently scheduled uplink transmission is canceled.

According to the foregoing solution, the terminal device can receive the first indication information, obtain the preset rule from the first indication information, and cancel the uplink transmission or the downlink reception in the first time unit and the uplink transmission or the downlink reception in the second time unit according to the preset rule.

In a possible implementation, the first indication information is carried in downlink control information, a media access control control element, or higher layer signaling.

In a possible implementation, the terminal device receives second indication information. The second indication information includes the preset rule, and the preset rule is that when dynamically scheduled downlink reception conflicts with dynamically scheduled uplink transmission, the dynamically scheduled downlink reception or the dynamically scheduled uplink transmission is canceled.

According to the foregoing solution, the terminal device can receive the second indication information, obtain the preset rule from the second indication information, and cancel the uplink transmission or the downlink reception in the first time unit and the uplink transmission or the downlink reception in the second time unit according to the preset rule.

In a possible implementation, the second indication information is carried in downlink control information, a media access control control element, or higher layer signaling.

In a possible implementation, the preset rule includes: when semi-persistently scheduled downlink reception conflicts with semi-persistently scheduled uplink transmission, canceling the semi-persistently scheduled downlink reception or the semi-persistently scheduled uplink transmission; or when dynamically scheduled downlink reception conflicts with dynamically scheduled uplink transmission, canceling the dynamically scheduled downlink reception or the dynamically scheduled uplink transmission.

According to the foregoing solution, the terminal device can cancel the uplink transmission or the downlink reception in the first time unit and the uplink transmission or the downlink reception in the second time unit according to the preset rule.

In an example, the preset rule includes: when dynamically scheduled downlink reception and semi-persistently scheduled uplink transmission overlap, canceling the semi-persistently scheduled uplink transmission; or when dynamically scheduled uplink transmission and semi-persistently scheduled downlink reception overlap, canceling the semi-persistently scheduled downlink reception.

In an example, the preset rule includes: when semi-persistently scheduled downlink reception and higher layer signaling-configured uplink transmission overlap, canceling the higher layer signaling-configured uplink transmission; or when semi-persistently scheduled uplink transmission and higher layer signaling-configured downlink reception overlap, canceling the higher layer signaling-configured downlink reception.

In an example, the preset rule includes: when dynamically scheduled downlink reception and higher layer signaling-configured uplink transmission overlap, canceling the higher layer signaling-configured uplink transmission; or when dynamically scheduled uplink transmission and higher layer signaling-configured downlink reception overlap, canceling the higher layer signaling-configured downlink reception.

In an example, the preset rule includes: when higher layer signaling-configured SSB reception conflicts with dynamically scheduled or higher layer signaling-configured uplink transmission, canceling the dynamically scheduled or higher layer signaling-configured uplink transmission.

In an example, the preset rule includes: when dynamically scheduled or semi-persistently scheduled downlink reception conflicts with a valid random access occasion (random occasion, RO), canceling uplink transmission on the valid RO, or canceling the dynamically scheduled or semi-persistently scheduled downlink reception; or canceling uplink transmission on the valid RO based on an implementation of the terminal device, or canceling the dynamically scheduled or semi-persistently scheduled downlink reception.

In an example, the preset rule includes: when a last symbol of higher layer signaling-configured uplink transmission is not earlier than time of *N*_{Tx-Rx} · *T*_{c} before a next SSB, canceling the higher layer signaling-configured uplink transmission. For example, when a last symbol of a higher layer signaling-configured physical uplink control channel (physical uplink control channel, PUCCH), physical uplink shared channel (physical uplink shared channel, PUSCH), or channel sounding reference signal (sounding reference signal, SRS) is not earlier than time of *N*_{Tx-Rx} · *T*_{c} before a next SSB, sending of the PUCCH, the PUSCH, or the SRS is canceled.

In an example, the preset rule includes: when a symbol of a physical random access channel (physical random access channel, PRACH) or a message A (message A, MsgA) is earlier than time of *N*_{Rx-Tx} · *T*_{c} of a last symbol of a higher layer signaling-configured physical downlink control channel (physical downlink control channel, PDCCH), physical downlink shared channel (physical downlink shared channel, PDSCH), channel state information (channel state information, CSI)-reference signal (reference signal, RS), downlink (downlink, DL)-positioning reference signal (positioning reference signal, PRS), or SSB, and an end symbol of the PRACH or a MsgA PUSCH is later than time of *N*_{Tx-Rx} · *T*_{c} of a first symbol of the higher layer signaling-configured PDCCH, PDSCH, CSI-RS, DL-PRS, or SSB, canceling sending of the PRACH and the MsgA, or canceling reception of the higher layer signaling-configured PDCCH, PDSCH, CSI-RS, DL-PRS, or SSB; or canceling sending of the PRACH and the MsgA based on an implementation of the terminal device, or canceling reception of the higher layer signaling-configured PDCCH, PDSCH, CSI-RS, DL-PRS, or SSB.

According to a second aspect, a communication method is provided. The method may be applied to a network side, for example, a network device or a communication module in the network device, or a circuit or a chip (for example, a modem (Modem) chip, also referred to as a baseband (baseband) chip, or a system on chip (System on Chip, SoC) chip or a system in package (System in Package) SiP chip including a modem core) responsible for a communication function in the network device. An example in which the method is applied to the network device is used for description. In the method, the network device determines, based on a first timing advance value, a first time unit in which uplink transmission and downlink reception overlap. The network device cancels uplink reception in the first time unit or cancels downlink transmission in the first time unit according to a preset rule.

It should be noted that a time unit in embodiments of this application may be a slot, a symbol, a subframe, repetition, or the like. In addition, canceling the uplink transmission may be canceling the entire uplink transmission, or may be canceling a part of the uplink transmission. For example, canceling semi-persistently scheduled uplink transmission in the first time unit may be canceling all uplink transmission in the first time unit, or may be canceling uplink transmission in some time units included in the first time unit, for example, canceling uplink transmission of some slots, some symbols, some subframes, or some repetition that overlaps downlink reception. Similarly, for canceling the downlink reception, refer to the implementation of canceling the uplink transmission. Details are not described in this application.

Optionally, in this embodiment of this application, the overlap between the uplink transmission and the downlink reception includes that a time unit used for the uplink transmission and a time unit used for the downlink reception partially or completely overlap. In this embodiment of this application, that the uplink transmission and the downlink reception overlap further includes that a time interval between the uplink transmission and the downlink reception is less than *N*_{Rx-Tx}. In this embodiment of this application, that the uplink transmission and the downlink reception overlap further includes that a time interval between the downlink reception and the uplink transmission is less than *N*_{Tx-Rx}.

In a possible implementation, canceling the downlink reception in the first time unit or canceling the uplink transmission in the first time unit is determined based on a priority of the downlink reception in the first time unit and a priority of the uplink transmission in the first time unit.

In a possible implementation, the priorities are determined based on a scheduling mode, and the scheduling mode includes at least two of the following: dynamic scheduling, higher layer signaling configuration, or semi-persistent scheduling.

In a possible implementation, a priority of SSB reception is higher than one or more of a priority of dynamically scheduled uplink transmission, a priority of semi-persistently scheduled uplink transmission, or a priority of higher layer signaling-configured uplink transmission.

In a possible implementation, the network device determines a third time unit based on a first timing advance range, where the first timing advance range is determined based on the first timing advance value. The third time unit includes a plurality of first time units.

In a possible implementation, the preset rule includes: when dynamic scheduling and semi-persistent scheduling overlap, canceling the semi-persistent scheduling; or when dynamic scheduling and higher layer signaling configuration overlap, canceling the higher layer signaling configuration; or when higher layer signaling configuration and semi-persistent scheduling overlap, canceling the higher layer signaling configuration. In a possible implementation, the preset rule includes: when SSB reception overlaps one or more of dynamically scheduled uplink transmission, semi-persistently scheduled uplink transmission, or higher layer signaling-configured uplink transmission, canceling one or more of the dynamically scheduled uplink transmission, the semi-persistently scheduled uplink transmission, or the higher layer signaling-configured uplink transmission.

In a possible implementation, the network device sends first indication information, where the first indication information includes the preset rule, and the preset rule is that when semi-persistently scheduled downlink reception conflicts with semi-persistently scheduled uplink transmission, the semi-persistently scheduled downlink reception or the semi-persistently scheduled uplink transmission is canceled.

In a possible implementation, the first indication information is carried in downlink control information, a media access control control element, or higher layer signaling.

In a possible implementation, the network device sends second indication information, where the second indication information includes the preset rule, and the preset rule is that when dynamically scheduled downlink reception conflicts with dynamically scheduled uplink transmission, the dynamically scheduled downlink reception or the dynamically scheduled uplink transmission is canceled.

In a possible implementation, the second indication information is carried in downlink control information, a media access control control element, or higher layer signaling.

In a possible implementation, the preset rule includes: when semi-persistently scheduled downlink reception conflicts with semi-persistently scheduled uplink transmission, canceling the semi-persistently scheduled downlink reception or the semi-persistently scheduled uplink transmission; or when dynamically scheduled downlink reception conflicts with dynamically scheduled uplink transmission, canceling the dynamically scheduled downlink reception or the dynamically scheduled uplink transmission.

In an example, the preset rule includes: when dynamically scheduled downlink reception and semi-persistently scheduled uplink transmission overlap, canceling the semi-persistently scheduled uplink transmission; or when dynamically scheduled uplink transmission and semi-persistently scheduled downlink reception overlap, canceling the semi-persistently scheduled downlink reception.

In an example, the preset rule includes: when semi-persistently scheduled downlink reception and higher layer signaling-configured uplink transmission overlap, canceling the higher layer signaling-configured uplink transmission; or when semi-persistently scheduled uplink transmission and higher layer signaling-configured downlink reception overlap, canceling the higher layer signaling-configured downlink reception.

In an example, the preset rule includes: when dynamically scheduled downlink reception and higher layer signaling-configured uplink transmission overlap, canceling the higher layer signaling-configured uplink transmission; or when dynamically scheduled uplink transmission and higher layer signaling-configured downlink reception overlap, canceling the higher layer signaling-configured downlink reception.

In an example, the preset rule includes: when higher layer signaling-configured SSB reception conflicts with dynamically scheduled or higher layer signaling-configured uplink transmission, canceling the dynamically scheduled or higher layer signaling-configured uplink transmission.

In an example, the preset rule includes: when the dynamically scheduled or semi-persistently scheduled downlink reception conflicts with a valid RO, canceling uplink transmission on the valid RO, or canceling the dynamically scheduled or semi-persistently scheduled downlink reception; or canceling uplink transmission on the valid RO based on an implementation of a terminal device, or canceling the dynamically scheduled or semi-persistently scheduled downlink reception.

In an example, the preset rule includes: when a last symbol of higher layer signaling-configured uplink transmission is not earlier than time of *N*_{Tx-Rx} · *T*_{c} before a next SSB, canceling the higher layer signaling-configured uplink transmission. For example, when a last symbol of a higher layer signaling-configured PUCCH, PUSCH, or SRS is not earlier than time of *N*_{Tx-Rx} · *T*_{c} before a next SSB, sending of the PUCCH, the PUSCH, or the SSB is canceled.

In an example, the preset rule includes: when a symbol of a PRACH or a MsgA is earlier than time of *N*_{Rx-Tx} · *T*_{c} of a last symbol of a higher layer signaling-configured PDCCH, PDSCH, CSI-RS, DL-PRS, or SSB, and an end symbol of the PRACH or a MsgA PUSCH is later than time of *N*_{Tx-Rx} · *T*_{c} of a first symbol of the higher layer signaling-configured PDCCH, PDSCH, CSI-RS, DL-PRS, or SSB, canceling sending of the PRACH and the MsgA, or canceling reception of the higher layer signaling-configured PDCCH, PDSCH, CSI-RS, DL-PRS, or SSB; or canceling sending of the PRACH and the MsgA based on an implementation of the terminal device, or canceling reception of the higher layer signaling-configured PDCCH, PDSCH, CSI-RS, DL-PRS, or SSB.

According to a third aspect, a communication apparatus is provided. The communication apparatus includes a processing unit and a transceiver unit.

The transceiver unit is configured to send a first timing advance value. The processing unit is configured to determine, based on the first timing advance value, a first time unit in which uplink transmission and downlink reception overlap, and determine, based on a second timing advance value, a second time unit in which uplink transmission and downlink reception overlap. The first time unit and the second time unit do not overlap. The processing unit is further configured to cancel the uplink transmission in the first time unit and the uplink transmission in the second time unit according to a preset rule; or cancel the uplink transmission in the first time unit and the downlink reception in the second time unit according to a preset rule; or cancel the downlink reception in the first time unit and the uplink transmission in the second time unit according to a preset rule; or cancel the downlink reception in the first time unit and the downlink reception in the second time unit according to a preset rule.

In a possible implementation, canceling the downlink reception in the first time unit or canceling the uplink transmission in the first time unit is determined based on a priority of the downlink reception in the first time unit and a priority of the uplink transmission in the first time unit; and/or canceling the downlink reception in the second time unit or canceling the uplink transmission in the second time unit is determined based on a priority of the downlink reception in the second time unit and a priority of the uplink transmission in the second time unit.

In a possible implementation, the priorities are determined based on a scheduling mode, and the scheduling mode includes at least two of the following: dynamic scheduling, higher layer signaling configuration, or semi-persistent scheduling.

In a possible implementation, the processing unit is specifically configured to determine a third time unit based on a first timing advance range, where the first timing advance range is determined based on the first timing advance value. The third time unit includes a plurality of first time units. Alternatively, the third time unit includes one or more first time units and a non-overlapping time unit, and the processing unit is further configured to cancel the uplink transmission in the second time unit or cancel the downlink reception in the second time unit according to the preset rule.

In a possible implementation, the preset rule includes: when dynamic scheduling and semi-persistent scheduling overlap, canceling the semi-persistent scheduling; or when dynamic scheduling and higher layer signaling configuration overlap, canceling the higher layer signaling configuration; or when higher layer signaling configuration and semi-persistent scheduling overlap, canceling the higher layer signaling configuration.

In a possible implementation, the transceiver unit is further configured to receive first indication information, where the first indication information includes the preset rule, and the preset rule is that when semi-persistently scheduled downlink reception conflicts with semi-persistently scheduled uplink transmission, the semi-persistently scheduled downlink reception or the semi-persistently scheduled uplink transmission is canceled.

In a possible implementation, the first indication information is carried in downlink control information, a media access control control element, or higher layer signaling.

In a possible implementation, the transceiver unit is further configured to receive second indication information, where the second indication information includes the preset rule, and the preset rule is that when dynamically scheduled downlink reception conflicts with dynamically scheduled uplink transmission, the dynamically scheduled downlink reception or the dynamically scheduled uplink transmission is canceled.

In a possible implementation, the second indication information is carried in downlink control information, a media access control control element, or higher layer signaling.

In a possible implementation, the preset rule includes: when semi-persistently scheduled downlink reception conflicts with semi-persistently scheduled uplink transmission, canceling the semi-persistently scheduled downlink reception or the semi-persistently scheduled uplink transmission; or when dynamically scheduled downlink reception conflicts with dynamically scheduled uplink transmission, canceling the dynamically scheduled downlink reception or the dynamically scheduled uplink transmission.

According to a fourth aspect, a communication apparatus is provided. The communication apparatus includes a processing unit and a transceiver unit.

The transceiver unit is configured to receive a first timing advance value. The processing unit is configured to determine, based on the first timing advance value, a first time unit in which uplink transmission and downlink reception overlap. The processing unit is further configured to cancel uplink reception in the first time unit or cancel downlink transmission in the first time unit according to a preset rule.

In a possible implementation, canceling the downlink reception in the first time unit or canceling the uplink transmission in the first time unit is determined based on a priority of the downlink reception in the first time unit and a priority of the uplink transmission in the first time unit.

In a possible implementation, the priorities are determined based on a scheduling mode, and the scheduling mode includes at least two of the following: dynamic scheduling, higher layer signaling configuration, or semi-persistent scheduling.

In a possible implementation, the processing unit is specifically configured to determine a third time unit based on a first timing advance range, where the first timing advance range is determined based on the first timing advance value. The third time unit includes a plurality of first time units.

In a possible implementation, the preset rule includes: when dynamic scheduling and semi-persistent scheduling overlap, canceling the semi-persistent scheduling; or when dynamic scheduling and higher layer signaling configuration overlap, canceling the higher layer signaling configuration; or when higher layer signaling configuration and semi-persistent scheduling overlap, canceling the higher layer signaling configuration.

In a possible implementation, the transceiver unit is further configured to send first indication information, where the first indication information includes the preset rule, and the preset rule is that when semi-persistently scheduled downlink reception conflicts with semi-persistently scheduled uplink transmission, the semi-persistently scheduled downlink reception or the semi-persistently scheduled uplink transmission is canceled.

In a possible implementation, the first indication information is carried in downlink control information, a media access control control element, or higher layer signaling.

In a possible implementation, the transceiver unit is further configured to send second indication information, where the second indication information includes the preset rule, and the preset rule is that when dynamically scheduled downlink reception conflicts with dynamically scheduled uplink transmission, the dynamically scheduled downlink reception or the dynamically scheduled uplink transmission is canceled.

In a possible implementation, the second indication information is carried in downlink control information, a media access control control element, or higher layer signaling.

In a possible implementation, the preset rule includes: when semi-persistently scheduled downlink reception conflicts with semi-persistently scheduled uplink transmission, canceling the semi-persistently scheduled downlink reception or the semi-persistently scheduled uplink transmission; or when dynamically scheduled downlink reception conflicts with dynamically scheduled uplink transmission, canceling the dynamically scheduled downlink reception or the dynamically scheduled uplink transmission.

According to a fifth aspect, a communication apparatus is provided, to implement the foregoing methods. The communication apparatus may be the terminal device in the foregoing first aspect, or an apparatus including the foregoing terminal device, or an apparatus included in the foregoing terminal device, for example, a chip. Alternatively, the communication apparatus may be the network device in the foregoing second aspect, or an apparatus including the foregoing network device, or an apparatus included in the foregoing network device. The communication apparatus includes a corresponding module, unit, or means (means) for implementing the foregoing method. The module, the unit, or the means may be implemented by hardware, software, or hardware executing corresponding software. The hardware or the software includes one or more modules or units corresponding to the foregoing functions.

According to a sixth aspect, a communication apparatus is provided. The communication apparatus includes a processor and a communication interface. The communication interface is configured to communicate with a module outside the communication apparatus, and the processor is configured to execute a computer program or instructions, to perform the method according to any one of the foregoing aspects. The communication apparatus may be the terminal device in the foregoing first aspect, or an apparatus including the foregoing terminal device, or an apparatus included in the foregoing terminal device, for example, a chip. Alternatively, the communication apparatus may be the network device in the foregoing second aspect, or an apparatus including the foregoing network device, or an apparatus included in the foregoing network device.

According to a seventh aspect, a communication apparatus is provided. The communication apparatus includes at least one processor. The processor is configured to execute a computer program or instructions stored in a memory, to implement the method according to any one of the foregoing aspects. The memory may be coupled to the processor, or may be independent of the processor. The communication apparatus may be the terminal device in the foregoing first aspect, or an apparatus including the foregoing terminal device, or an apparatus included in the foregoing terminal device, for example, a chip. Alternatively, the communication apparatus may be the network device in the foregoing second aspect, or an apparatus including the foregoing network device, or an apparatus included in the foregoing network device.

According to an eighth aspect, this application provides a communication system. The communication system may include the terminal device that performs the method according to the foregoing first aspect and the network device that performs the method according to the second aspect.

According to a ninth aspect, this application provides a computer-readable storage medium. The computer storage medium stores computer-readable instructions, and when a computer reads and executes the computer-readable instructions, the computer is caused to perform the method according to any one of the possible implementations of either of the foregoing first aspect and second aspect.

According to a tenth aspect, this application provides a computer program product. When a computer reads and executes the computer program product, the computer is caused to perform the method according to any one of the possible implementations of either of the foregoing first aspect and second aspect.

According to an eleventh aspect, this application provides a chip. The chip is configured to read a computer program stored in a memory, to perform the method according to any one of the possible implementations of either of the foregoing first aspect and second aspect.

For technical effects that can be achieved in any one of the foregoing second aspect to fourteenth aspect, refer to the descriptions of the technical effects that can be achieved in any one of the possible implementations of the foregoing first aspect. Repeated parts are not described.

### BRIEF DESCRIPTION OF DRAWINGS

FIG. 1 is a diagram of an architecture of a communication system according to an embodiment of this application;
FIG. 2A is a diagram of a communication scenario according to an embodiment of this application;
FIG. 2B is a diagram of another communication scenario according to an embodiment of this application;
FIG. 2C is a diagram of another communication scenario according to an embodiment of this application;
FIG. 3 is a diagram of a time sequence relationship between uplink transmission and downlink reception according to an embodiment of this application;
FIG. 4 is an example flowchart of a communication method according to an embodiment of this application;
FIG. 5A is a diagram of another time sequence relationship between uplink transmission and downlink reception according to an embodiment of this application;
FIG. 5B is a diagram of another time sequence relationship between uplink transmission and downlink reception according to an embodiment of this application;
FIG. 6 is a diagram of another time sequence relationship between uplink transmission and downlink reception according to an embodiment of this application;
FIG. 7 is a diagram of another time sequence relationship between uplink transmission and downlink reception according to an embodiment of this application;
FIG. 8 is a diagram of a communication apparatus according to an embodiment of this application;
FIG. 9 is a diagram of another communication apparatus according to an embodiment of this application;
FIG. 10 is a diagram of another communication apparatus according to an embodiment of this application; and
FIG. 11 is a diagram of another communication apparatus according to an embodiment of this application.

### DESCRIPTION OF EMBODIMENTS

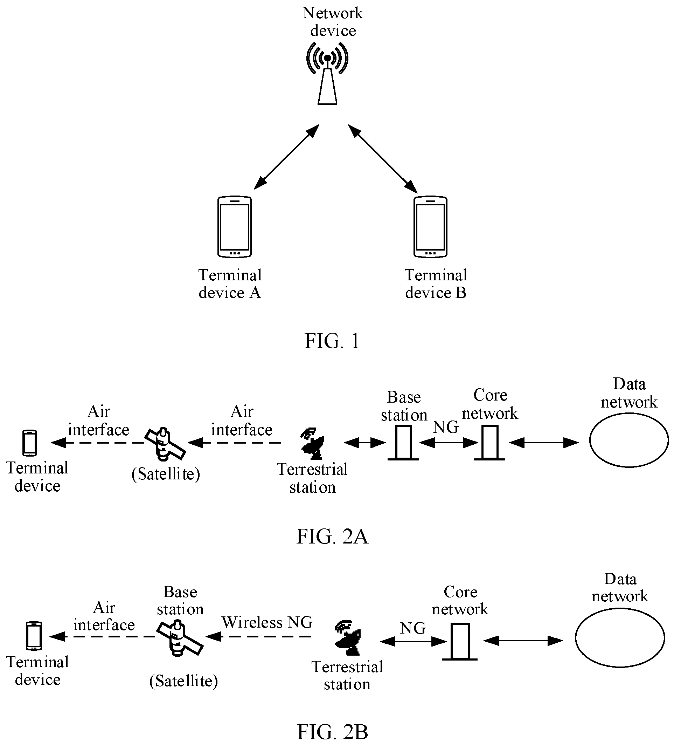

The technical solutions in embodiments of this application may be applied to various communication systems, for example, a 5G communication system and a non-terrestrial network (non-terrestrial network, NTN), and may also be applied to a communication system evolved after 5G, for example, a future communication system. FIG. 1 is a diagram of an architecture of a communication system according to an embodiment of this application. The communication system includes a network device and a terminal device. For example, there is one network device, and there are two terminal devices (a terminal device A and a terminal device B). The terminal device A and the terminal device B may separately or simultaneously communicate with the network device. It should be noted that a quantity of terminal devices and a quantity of network devices in the communication system shown in FIG. 1 are not limited in embodiments of this application.

The foregoing terminal device may also be referred to as a terminal (terminal), user equipment (user equipment, UE), a mobile station (mobile station, MS), a mobile terminal, or the like, and is an apparatus or a device having a wireless communication function. The terminal device may be widely used in various scenarios, for example, machine type communication (machine type communication, MTC), an internet of things (internet of things, IoT), vehicle-to-everything (vehicle-to-everything, V2X), virtual reality, augmented reality, industrial control, autonomous driving, telemedicine, a smart grid, smart furniture, a smart office, smart wearable, smart transportation, and a smart city. The terminal device may be a subscriber unit (subscriber unit), a cellular phone (cellular phone), a smartphone (smartphone), a wireless data card, a personal digital assistant (personal digital assistant, PDA) computer, a tablet computer, a wireless modem (modem), a handheld device (handset), a laptop computer (laptop computer), customer-premises equipment (customer-premises equipment, CPE), a smart point of sale (point of sale, POS) machine, a wearable device, a vehicle, an uncrewed aerial vehicle, a helicopter, a plane, a ship, a robot, a mechanical arm, a smart home device, an MTC device, a terrestrial station, or the like. A specific technology and a specific device form that are used by the terminal device are not limited in embodiments of this application.

The foregoing network device may also be referred to as an access network (access network, AN) device or a radio access network (radio access network, RAN) device, and is an apparatus or a device that may be deployed in a radio access network to provide a wireless communication function for the terminal device. The network device may be a base station used for wireless communication, for example, an artificial earth satellite and a high altitude aircraft, for example, a medium earth orbit (medium earth orbit, MEO) satellite or a low earth orbit (low earth orbit, LEO) satellite of a non-geostationary earth orbit (non-geostationary earth orbit, NGEO), a high altitude platform station (high altitude platform station, HAPS), an evolved NodeB (evolved NodeB, eNB), and a 5G base station (gNB). Optionally, the network device in embodiments of this application may include various forms of base stations, for example, a macro base station, a micro base station (also referred to as a small cell), a relay station, an access point, a device that implements a base station function in a communication system evolved after 5G, a transmitting and receiving point (transmitting and receiving point, TRP), a transmitting point (transmitting point, TP), a mobile switching center, and a device that performs a base station function in device-to-device (device-to-device, D2D), vehicle-to-everything (vehicle-to-everything, V2X), and machine-to-machine (machine-to-machine, M2M) communication, and may further include a central unit (central unit, CU), a distributed unit (distributed unit, DU), and the like in a cloud access network (cloud radio access network, C-RAN) system. This is not specifically limited in embodiments of this application.

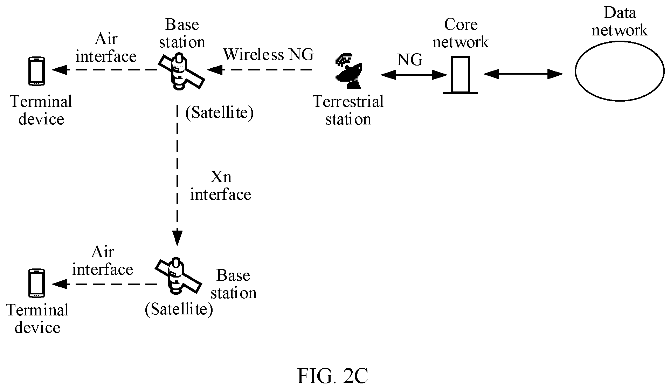

For example, the network device is a satellite. Communication scenarios to which embodiments of this application are specifically applied may be shown in FIG. 2A, FIG. 2B, and FIG. 2C.

In the scenario shown in FIG. 2A, a base station is deployed on the ground, a satellite is connected to a terrestrial station through an air interface, and the terrestrial station may be connected to the base station through a wireless or wired link. A terminal device on the ground accesses a mobile communication network through an air interface (where there may be various types of air interfaces, for example, a 5G air interface). The satellite is used as a transmission node to forward information about the terminal device.

In the scenario shown in FIG. 2B, a base station is deployed on a satellite, the satellite is connected to a terrestrial station through an air interface, and the terrestrial station may be connected to a core network through a wireless or wired link. A terminal device on the ground communicates with the satellite base station through an air interface, to access a mobile communication network. The satellite is used as a base station and is connected to the terrestrial station through an NG interface of the air interface, and the terrestrial station is connected to the core network through an NG interface. The NG interface may be in a wireless form or a wired form.

Compared with the scenario shown in FIG. 2B, in the scenario shown in FIG. 2C, a communication scenario between satellite base stations is added. Specifically, the satellite base stations may communicate with each other through an Xn interface.

In FIG. 2A to FIG. 2C, the terminal device may include any type of terminal device that supports new radio, for example, any type of terminal listed above. The terminal device may access a satellite network through the air interface and initiates services such as calling and internet access.

The base station is mainly configured to provide a radio access service, schedule a radio resource to an accessing terminal device, and provide a reliable radio transmission protocol, data encryption protocol, and the like.

The core network is mainly configured to provide functions such as user access control, mobility management, session management, user security authentication, and charging. The core network includes a plurality of functional units that may be classified into control-plane functional entities and data-plane functional entities.

The terrestrial station is mainly responsible for forwarding signaling and service data between the satellite and the base station or between the satellite and the core network.

The air interface indicates a radio link between the terminal device and the base station.

The Xn interface indicates an interface between the satellite base stations, and is mainly used for signaling exchange such as handover.

The NG interface indicates an interface between the base station and the core network, or an interface between the terrestrial station and the core network, or an interface between the satellite base station and the terrestrial station (in this case, the interface is a radio link), and is mainly used for exchange of non-access stratum (non-access stratum, NAS) signaling or other signaling of the core network and service data of a user.

With the development of information technologies, more urgent requirements are imposed on efficiency, mobility, diversity, and other aspects of communication. Currently, satellites play an indispensable role in some important fields, such as space communication, aeronautical communication, maritime communication, and military communication. Compared with terrestrial mobile networks, satellite communication can achieve wide area coverage or even global coverage by using high-, medium-, and low-orbit satellites, and can provide uniform communication services for users worldwide. A satellite communication system and a 5th generation (5th generation, 5G) communication system are integrated to complement each other, to jointly form an integrated communication network with seamless global coverage across sea, land, air, and space, thereby meeting various ubiquitous service requirements of users. This is an important direction for future communication development.

Integration of a satellite and 5G gives full play to advantages to provide more comprehensive and higher-quality services for the users. Main features are as follows: (1) In remote areas, airplanes, or ocean-going ships that cannot be covered by a 5G terrestrial network, the satellite can provide economical and reliable network services, to extend the network to areas that cannot be reached by the terrestrial network. (2) The satellite can provide continuous network connections for users on an internet of things device and mobile carriers such as an airplane, a ship, a train, and a car. The integration of the satellite and 5G can greatly enhance a service capability of 5G. (3) The satellite has an excellent broadcast/multicast capability that can provide efficient data distribution services for a network edge and a terminal device.

Compared with an early satellite mobile communication system, the development of current satellite mobile communication has two characteristics: miniaturization of mobile terminals: supporting a plurality of mobile communication terminals, including handsets; and broadbandization of communication services: in addition to a conventional narrowband voice service, further providing a high-speed data service and a network multimedia communication service.

A distinct characteristic of satellite communication is its large round-trip transmission delay. Terminal devices need to frequently perform beam switching and cell handover due to movement of satellites, further increasing the communication delay. Therefore, integration of satellite communication and 5G requires enhancement of the current 5G protocol to adapt to satellite communication. In addition, satellite communication must support terminal devices with different capabilities. One such type is a half-duplex terminal device, meaning that the terminal device cannot simultaneously perform uplink transmission and downlink reception. An interval *N*_{Tx-Rx} is needed between the uplink transmission and the downlink reception, and an interval *N*_{Rx-Tx} is needed between the downlink reception and the uplink transmission. A low frequency band FR1 and a high frequency band FR2 are respectively shown in Table 1.

**Table 1: Example of an interval between uplink transmission and downlink reception**

| Handover interval (transition time) | FR1 | FR2 |
|---|---|---|
| *N*_{Tx-Rx} | 25,600 | 13,792 |
| *N*_{Rx-Tx} | 25,600 | 13,792 |

In Table 1, 25,600 and 13,792 may represent quantities of sampling points, and *N*_{Tx-Rx} and *N*_{Rx-Tx} are the quantities of sampling points multiplied by a sampling point interval. For example, in FR1, *N*_{Tx-Rx} is a product of 25,600 and the sampling point interval. It may be understood that the sampling point interval may be predefined in a protocol. This is not specifically limited in this application.

For the half-duplex terminal, some rules are defined in the 5G protocol, to indicate how the terminal device performs processing when a conflict occurs between the uplink transmission and the downlink reception. However, the rules defined in the 5G protocol are for terrestrial communication, and a delay of terrestrial communication is short. Reception of the network device and the terminal device is almost aligned with sending of the network device and the terminal device. The network device knows when a conflict occurs on the terminal device, and also knows, according to the rules defined in the 5G protocol, how the terminal device performs processing. However, for a scenario in which a transmission delay is very large, for example, an NTN scenario, a mismatch may occur between the actual conflict situation experienced by the terminal device and that perceived by the network device.

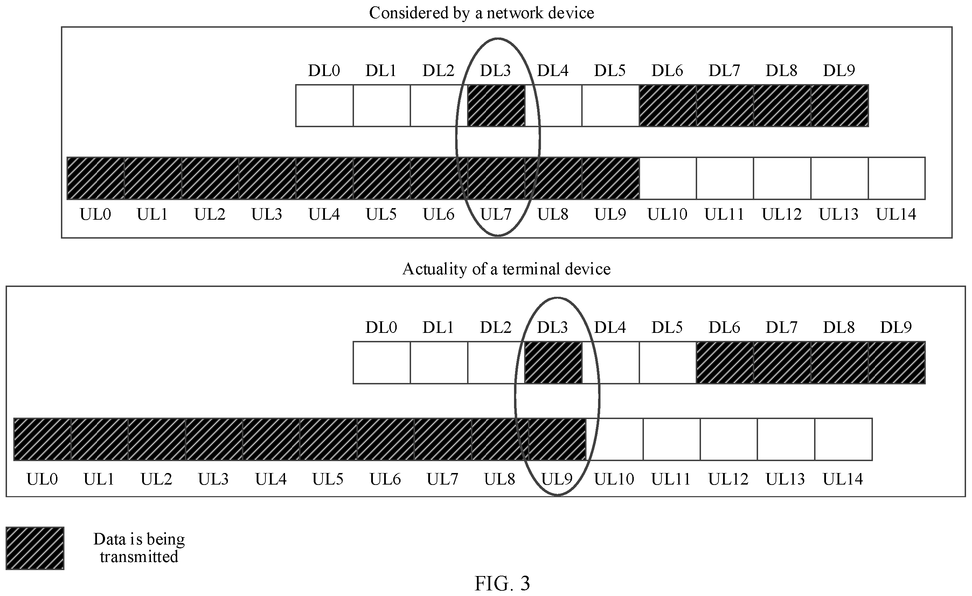

FIG. 3 is a diagram of a time sequence relationship between uplink transmission and downlink reception of a terminal device. In FIG. 3, an example in which resources used for the uplink transmission are uplink (uplink, UL) 0 to UL14 is used for description, and an example in which resources used for the downlink reception are downlink (downlink, DL) 0 to DL9 is used for description. As shown in FIG. 3, a network device considers that a conflict occurs between UL7 and DL3. According to a rule defined in a 5G protocol, the network device considers that a first terminal device cancels the uplink transmission in UL7. In this case, the network device schedules UL7 to another terminal device, for example, a second terminal device, to perform the uplink transmission. However, actually, a conflict of the first terminal device occurs between UL9 and DL3. In this case, the first terminal device transmits data in UL7 as there is no conflict in UL7. It can be learned from the foregoing content that the network device schedules UL7 to the second terminal device, to perform the uplink transmission. Therefore, data of the first terminal device and data of the second terminal device interfere with each other on a network device side. Consequently, the data of the two terminal devices cannot be decoded.

It should be noted that a time sequence relationship considered by the network device may be determined based on a timing advance (time advance, TA) value reported by the terminal device. The TA is a round-trip transmission delay, and the network device may calculate the transmission delay based on the TA. In addition, in FIG. 3, there are actual corresponding intervals between handover from uplink to downlink and handover from downlink to uplink, which are not shown in FIG. 3 for simplicity.

However, the TA reported by the terminal device has an error. Therefore, a mismatch occurs between the conflict situation experienced by the network device and the actual conflict situation perceived by the terminal device, resulting in poor data transmission performance.

In view of this, embodiments of this application provide a communication method. In the method, a terminal device may determine, based on a reported first timing advance value, a first time unit that is considered by a network device and in which uplink transmission and downlink reception overlap; and determine, based on a second timing advance value, a second time unit in which uplink transmission and downlink reception of the terminal device actually overlap. Accordingly, the terminal device can cancel the uplink transmission or the downlink reception in the first time unit, and can cancel the uplink transmission or the downlink reception in the second time unit. In other words, when the conflict situation of the terminal device does not match that perceived by the network device, both transmission on the resource considered conflicting by the network device and transmission on the resource actually conflicting at the terminal device are canceled. This prevents the network device from scheduling the considered conflicting resource to another terminal device, thereby improving communication performance.

In embodiments of this application, that the uplink transmission conflicts with the downlink reception may be understood as that the uplink transmission and the downlink reception overlap, or that a resource for the uplink transmission and a resource for the downlink reception partially or completely overlap. In embodiments of this application, the overlap between the uplink transmission and the downlink reception includes that a time unit used for the uplink transmission and a time unit used for the downlink reception partially or completely overlap. In embodiments of this application, that the uplink transmission and the downlink reception overlap further includes that a time interval between the uplink transmission and the downlink reception is less than *N*_{Rx-Tx}. In embodiments of this application, that the uplink transmission and the downlink reception overlap further includes that a time interval between the downlink reception and the uplink transmission is less than *N*_{Tx-Rx}.

In embodiments of this application, a higher layer may be understood as a higher layer protocol layer, and includes at least one protocol layer above a physical layer: a media access control (media access control, MAC) layer, a radio protocol layer (radio access layer, RAL), a radio link control (radio link control, RLC) layer, a packet data convergence protocol (packet data convergence protocol, PDCP) layer, a radio resource control (radio resource control, RRC) layer, and a non-access (non-access stratum, NAS) stratum. Correspondingly, in embodiments of this application, higher layer signaling may be NAS signaling, an RRC message, or a media access control (media access control, MAC) control element (control element, CE). RRC signaling may include dedicated RRC signaling or broadcast/multicast RRC signaling. This is not limited in embodiments of this application.

In addition, it should be understood that ordinal numbers such as "first" and "second" in embodiments of this application are intended to distinguish between a plurality of objects, but are not intended to limit sizes, content, a sequence, a time sequence, priorities, importance, or the like of the plurality of objects. For example, a first service area and a second service area do not indicate a difference in priorities, importance, or the like corresponding to the two service areas.

In embodiments of this application, unless otherwise specified, a quantity of nouns indicates "a singular noun or a plural noun", that is, "one or more". "At least one" means one or more, and "a plurality of" means two or more. "And/or" describes an association relationship between associated objects and indicates that three relationships may exist. For example, A and/or B may indicate the following three cases: Only A exists, both A and B exist, and only B exists, where A and B may be singular or plural. The character "/" generally indicates an "or" relationship between the associated objects. For example, A/B indicates A or B. "At least one item (piece) of the following" or a similar expression thereof means any combination of these items, including a singular item (piece) or any combination of plural items (pieces). For example, at least one item (piece) of a, b, or c indicates: a, b, c, a and b, a and c, b and c, or a, b, and c. Herein, a, b, and c may be singular or plural.

For ease of understanding of the technical solutions provided in embodiments of this application, the following describes conflict handling rules defined in the 5G protocol.

Case 1: Dynamically scheduled downlink reception, for example, downlink reception of downlink control information (downlink control information, DCI), conflicts with semi-persistently scheduled uplink transmission.

Semi-persistent scheduling may be configured by using higher layer signaling, and activated by using the DCI or a media access control (media access control, MAC) control element (control element, CE).

For example, sending of a higher layer signaling-configured SRS, PUCCH, or PUSCH conflicts with a DCI-scheduled CSI-RS or PDSCH.

### Conflict handling rules:

1. Sending of the PUCCH or the PUSCH within a time period *T*_{*proc*,2} after a last symbol of a PDCCH is received is not canceled, and sending of another PUCCH or PUSCH is canceled.
2. Sending of the SRS within the time period *T*_{*proc*,2} after the last symbol of the PDCCH is received is not canceled, and sending of another SRS is canceled.

It may be understood that *T*_{*proc*,2} is predefined in a protocol.

Case 2: Semi-persistently scheduled downlink reception conflicts with dynamically scheduled uplink transmission.

Semi-persistent scheduling may be configured by using higher layer signaling, and activated by using DCI or a MAC CE.

For example, a higher layer signaling-configured PDCCH, standard positioning service (standard positioning system, SPS) PDSCH, CSI-RS, or DL-PRS conflicts with sending of a DCI-scheduled PUSCH, PUCCH, PRACH, or SRS.

Conflict handling rule: Reception of the higher layer signaling-configured PDCCH, SPS PDSCH, CSI-RS, or DL-PRS is canceled.

Case 3: Semi-persistently scheduled downlink reception conflicts with semi-persistently scheduled uplink transmission.

For example, higher layer signaling-configured downlink reception, or a PDCCH-chirp spread spectrum (chirp spread spectrum, CSS) of higher layer signaling-configured type (type) 0, type 0A, type 0B, type 1, and type 2 conflicts with higher layer signaling-configured uplink transmission.

Conflict handling rule: If a paging occasion conflicts with a configured grant (configured grant, CG)-PUSCH in semi-persistently scheduled uplink transmission, a terminal device receives the CSS of type 2 on a reception occasion, and the semi-persistently scheduled uplink transmission of the CG-PUSCH in an inactive state is canceled.

For another scenario considered as an incorrect scenario, a network device may perform scheduling to avoid the scenario.

Case 4: Dynamically scheduled downlink reception conflicts with dynamically scheduled uplink transmission.

For example, DCI-scheduled uplink transmission conflicts with DCI-scheduled downlink reception.

Conflict handling rule: For a scenario considered as an incorrect scenario, a network device may perform scheduling to avoid the scenario.

Case 5: Reception of a higher layer signaling-configured synchronization signal block (synchronization signal physical broadcast channel, SSB) conflicts with dynamically scheduled or higher layer signaling-configured uplink transmission.

For example, a PDCCH-triggered PRACH, PUSCH, PUCCH, or SRS conflicts with the SSB.

Conflict handling rule: A terminal device does not send the PRACH, the PUSCH, or the PUCCH.

Case 6: Dynamically scheduled or semi-persistently scheduled downlink reception conflicts with a valid RO.

For example, a higher layer signaling-triggered PRACH or message A (message A, MsgA) PUSCH conflicts with a PDCCH, a PDSCH, a CSI-RS, a DL-PRS, or an SSB.

Conflict handling rule: Whether to perform downlink reception or uplink transmission is determined based on an implementation of a terminal device.

Case 7: Uplink handover conflicts with downlink handover.

Example 1: A higher layer signaling-configured PUSCH, PUCCH, or SRS conflicts with an SSB.

### Conflict handling rules:

1. If a last symbol of the PUSCH or the PUCCH is not earlier than time of *N*_{Tx-Rx} · *T*_{c} before a next SSB, sending of the PUCCH or the PUSCH is canceled.
2. If a first symbol of the PUSCH or the PUCCH is not later than time of *N*_{Rx-Tx} · *T*_{c} after a previous SSB, sending of the PUCCH or the PUSCH is canceled.
3. If a last symbol of the SRS is not earlier than time of *N*_{Tx-Rx} · *T*_{c} before a next SSB, sending of the SRS is canceled.
4. If a first symbol of the SRS is not later than time of *N*_{Rx-Tx} · *T*_{c} after a previous SSB, sending of the SRS is canceled.

It may be understood that, for *N*_{Rx-Tx} and *N*_{Tx-Rx}, refer to Table 1 for implementation, and *T*_{c} may be specified in a protocol.

Example 2: If a start symbol of a PRACH or a MsgA PUSCH is earlier than time of *N*_{Rx-Tx} · *T*_{c} of a last symbol of a higher layer signaling-configured PDCCH, PDSCH, CSI-RS, DL-PRS, or SSB, and an end symbol of the PRACH or the MsgA PUSCH is later than time of *N*_{Tx-Rx} · *T*_{c} of a first symbol of the higher layer signaling-configured PDCCH, PDSCH, CSI-RS, DL-PRS, or SSB, whether to perform downlink reception or uplink transmission is selected based on an implementation of a terminal device.

It should be noted that names of the foregoing conflict handling rules, for example, Case 1 to Case 7, are merely used as examples, and do not constitute a limitation on the names of the conflict handling rules.

The communication method provided in embodiments of this application may be performed by a first communication apparatus and a second communication apparatus. The first communication apparatus herein may be a terminal device, or may be a processor, a module, a chip, a chip system, or the like that is in the terminal device and that implements the method. The second communication apparatus may be a network device, or may be a processor, a module, a chip, a chip system, or the like that is in the network device and that implements the method. The following describes the access method provided in this application by using an example in which the first communication apparatus and the second communication apparatus are respectively a first terminal device and a second terminal device.

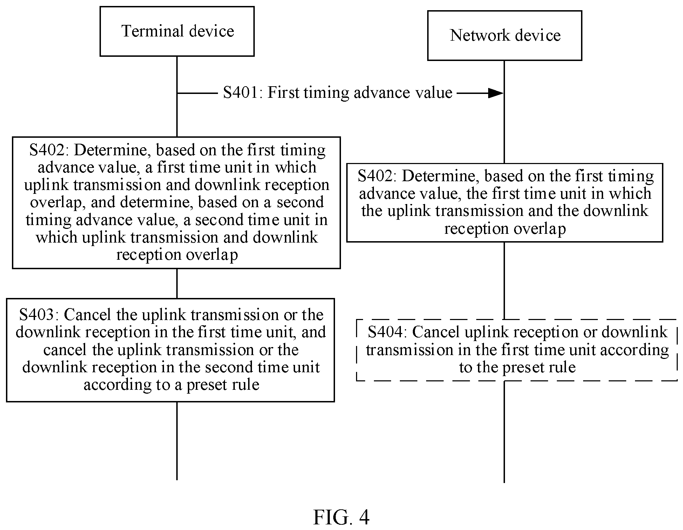

FIG. 4 is an example flowchart of a communication method according to an embodiment of this application. The method may include the following steps.

S401: A terminal device sends a first timing advance value to a network device.

Correspondingly, the network device receives the first timing advance value from the terminal device.

S402: The terminal device determines, based on the first timing advance value, a first time unit in which uplink transmission and downlink reception overlap, and determines, based on a second timing advance value, a second time unit in which uplink transmission and downlink reception overlap.

Similarly, the network device determines the first time unit based on the first timing advance value. It may be understood that, for a manner in which the network device determines the first time unit based on the first timing advance value, refer to a manner in which the terminal device determines the first time unit based on the first timing advance value for implementation.

For example, in S402, the terminal device may determine, based on the first timing advance value, a time sequence relationship between the uplink transmission and the downlink reception, to determine the first time unit in which the uplink transmission and the downlink reception overlap. The terminal device may determine, based on the second timing advance value, the time sequence relationship between the uplink transmission and the downlink reception, to determine the second time unit in which the uplink transmission and the downlink reception overlap. A time unit in embodiments of this application may be a slot, a symbol, a subframe, repetition, or the like.

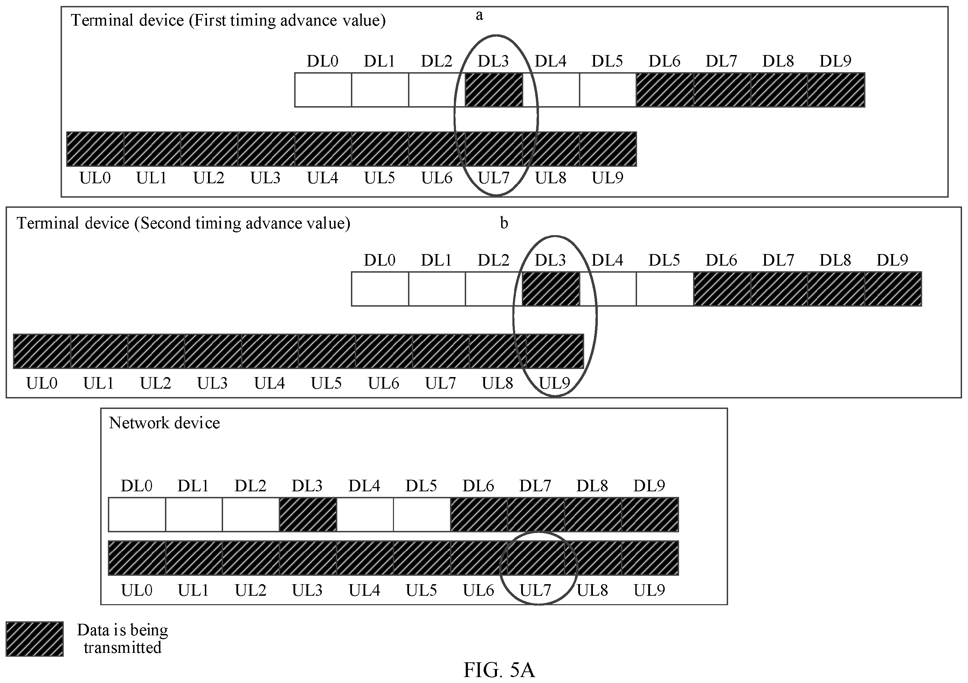

FIG. 5A is a diagram of a time sequence relationship between uplink transmission and downlink reception. In S402, the terminal device may determine, based on the first timing advance value, the time sequence relationship between the uplink transmission and the downlink reception, as shown in a in FIG. 5A. It can be learned that UL7 conflicts with DL3. In other words, in a time unit corresponding to UL7 and DL3, downlink reception and uplink transmission overlap. In this case, the time unit corresponding to UL7 and DL3 may be considered as the first time unit. The terminal device may determine, based on the second timing advance value, the time sequence relationship between the uplink transmission and the downlink reception, as shown in b in FIG. 5A. It can be learned that UL9 conflicts with DL2. In other words, in a time unit corresponding to UL9 and DL2, downlink reception and uplink transmission overlap. In this case, the time unit corresponding to UL9 and DL2 may be considered as the second time unit.

It should be noted that in FIG. 5A, an example in which resources used for the uplink transmission are UL0 to UL9 is used for description, and an example in which resources used for the downlink reception are DL0 to DL9 is used for description. UL0 to UL9 shown in FIG. 5A cannot constitute a limitation on the resources used for the uplink transmission, and DL0 to DL9 shown in FIG. 5A cannot constitute a limitation on the resources used for the downlink reception.

It may be understood that the first timing advance value is a timing advance value reported by the terminal device, the second timing advance value may be a current timing advance value, and the first timing advance value and the second timing advance value may be the same or different. In addition, the first time unit and the second time unit do not overlap. For example, the first time unit and the second time unit are completely non-overlapping. For example, the first time unit and the second time unit are two different slots. For another example, the first time unit and the second time unit are partially overlapping. For example, some symbols in the first time unit and the second time unit overlap.

S403: The terminal device cancels the uplink transmission or the downlink reception in the first time unit, and cancels the uplink transmission or the downlink reception in the second time unit according to a preset rule.

For example, the terminal device cancels the uplink transmission in the first time unit and the uplink transmission in the second time unit according to the preset rule. For another example, the terminal device cancels the downlink reception in the first time unit and the uplink transmission in the second time unit according to the preset rule. For another example, the terminal device cancels the downlink reception in the first time unit and the downlink reception in the second time unit according to the preset rule. For another example, the terminal device cancels the uplink transmission in the first time unit and the downlink reception in the second time unit according to the preset rule.

It may be understood that, in this embodiment of this application, canceling the uplink transmission in the first time unit may also be understood as performing the downlink reception in the first time unit. Similarly, canceling the downlink reception in the first time unit may also be understood as performing the uplink transmission in the first time unit, canceling the uplink transmission in the second time unit may be understood as performing the downlink reception in the second time unit, and canceling the downlink reception in the second time unit may be understood as performing the uplink transmission in the second time unit.

In this embodiment of this application, the preset rule may be predefined in a protocol, or may be preconfigured. The following describes different cases.

Case 1: The preset rule includes canceling the uplink transmission or the downlink reception based on a priority of the uplink transmission and a priority of the downlink reception.

In Case 1, the terminal device may cancel the uplink transmission or the downlink reception in the first time unit based on a priority of the uplink transmission in the first time unit and a priority of the downlink reception in the first time unit, and the terminal device may cancel the uplink transmission or the downlink reception in the second time unit based on a priority of the uplink transmission in the second time unit and a priority of the downlink reception in the second time unit.

For example, when the priority of the uplink transmission in the first time unit is lower than the priority of the downlink reception in the first time unit, the uplink transmission in the first time unit is canceled or the downlink reception in the first time unit is performed. For example, when the priority of the uplink transmission in the first time unit is higher than the priority of the downlink reception in the first time unit, the downlink reception in the first time unit is canceled or the uplink transmission in the first time unit is performed. Similarly, when the priority of the uplink transmission in the second time unit is lower than the priority of the downlink reception in the second time unit, the uplink transmission in the second time unit is canceled or the downlink reception in the second time unit is performed; or when the priority of the uplink transmission in the second time unit is higher than the priority of the downlink reception in the second time unit, the downlink reception in the second time unit is canceled or the uplink transmission in the second time unit is performed.

In a possible implementation, the priority may be determined based on a scheduling mode. The scheduling mode may include one of dynamic scheduling, higher layer signaling configuration, or semi-persistent scheduling. In a possible case, different scheduling modes correspond to different priorities. For example, a priority of the dynamic scheduling is higher than a priority of the semi-persistent scheduling, and the priority of the semi-persistent scheduling is higher than a priority of the higher layer signaling configuration.

For example, as shown in FIG. 5A, in the first time unit, DL3 is for dynamically scheduled downlink reception, and UL7 is for semi-persistently scheduled uplink transmission. In this case, the terminal device may cancel the semi-persistently scheduled uplink transmission in the first time unit (UL7). For another example, as shown in FIG. 5A, in the second time unit, DL2 is for semi-persistently scheduled downlink reception, and UL9 is for dynamically scheduled uplink transmission. In this case, the terminal device may cancel the semi-persistently scheduled downlink reception in the second time unit (DL2).

For another example, as shown in FIG. 5A, in the first time unit, DL3 is for semi-persistently scheduled downlink reception, and UL7 is for higher layer signaling-configured uplink transmission. In this case, the terminal device may cancel the higher layer signaling-configured uplink transmission in the first time unit (UL7). For another example, as shown in FIG. 5A, in the second time unit, DL2 is for higher layer signaling-configured downlink reception, and UL9 is for dynamically scheduled uplink transmission. In this case, the terminal device may cancel the higher layer signaling-configured downlink reception in the second time unit (DL2).

It should be noted that canceling the uplink transmission may be canceling the entire uplink transmission, or may be canceling a part of the uplink transmission. For example, as shown in FIG. 5A, canceling the semi-persistently scheduled uplink transmission in the first time unit (UL7) may be canceling all uplink transmission in the first time unit, or may be canceling uplink transmission in some time units included in the first time unit, for example, canceling uplink transmission of some slots, some symbols, some subframes, or some repetition that overlaps DL3. Similarly, for canceling the downlink reception, refer to the implementation of canceling the uplink transmission. Details are not described in this application.

According to the foregoing solution, the terminal device can determine the priority of the uplink transmission and the priority of the downlink reception based on a scheduling mode of the uplink transmission and a scheduling mode of the downlink reception, to cancel the uplink transmission or the downlink reception, thereby ensuring transmission of a high-priority service.

In a possible case, a priority of SSB reception is higher than the priority of the uplink transmission. The uplink transmission may include one or more of dynamically scheduled uplink transmission, semi-persistently scheduled uplink transmission, or higher layer signaling-configured uplink transmission. When the SSB reception and the uplink transmission overlap, the uplink transmission is canceled and/or the SSB reception is performed. For example, when the SSB reception and the dynamically scheduled uplink transmission overlap, the dynamically scheduled uplink transmission is canceled and/or the SSB reception is performed. For another example, when the SSB reception and the semi-persistently scheduled uplink transmission overlap, the semi-persistently scheduled uplink transmission is canceled and/or the SSB reception is performed. For another example, when the SSB reception and the higher layer signaling-configured uplink transmission overlap, the higher layer signaling-configured uplink transmission is canceled and/or the SSB reception is performed. For another example, when the SSB reception and the semi-persistently scheduled uplink transmission and the higher layer signaling-configured uplink transmission overlap, the semi-persistently scheduled uplink transmission and the higher layer signaling-configured uplink transmission are canceled and/or the SSB reception is performed. For example, refer to FIG. 5A. UL7 is a resource for a PDCCH-triggered PRACH, PUSCH, PUCCH, or SRS, and DL3 is a resource for an SSB. In this case, the terminal device may cancel sending of the PRACH, the PUSCH, the PUCCH, or the SRS in UL7.

In some embodiments, if the scheduling mode of the uplink transmission is the same as the scheduling mode of the downlink reception, the priority of the uplink transmission and the priority of the downlink reception may be indicated by the network device, predefined in a protocol, or determined based on an implementation of the terminal device. The scheduling mode may include one of dynamic scheduling, higher layer signaling configuration, or semi-persistent scheduling. In a possible case, different scheduling modes correspond to different priorities. The foregoing embodiment may also be understood as follows: When the uplink transmission and the downlink reception overlap, if a preset priority corresponding to the uplink transmission is the same as a preset priority corresponding to the downlink reception, whether to perform the uplink transmission or the downlink reception, or whether to cancel the uplink transmission or the downlink reception may be indicated by the network device, predefined in a protocol, or determined based on an implementation of the terminal device.

In an example, when the scheduling mode of the uplink transmission is dynamic scheduling, and the scheduling mode of the downlink reception is dynamic scheduling, the network device may indicate the priority of the uplink transmission and the priority of the downlink transmission by using higher layer signaling.

It should be noted that, when the priority is indicated, a priority value may be indicated, or a priority level may be indicated. Optionally, a higher priority value may represent a higher priority; or on the contrary, a lower priority value may represent a higher priority. Details are not described in the following again. Similarly, a higher priority level may represent a higher priority; or on the contrary, a lower priority level may represent a higher priority. Details are not described in the following again.

In an example, when the scheduling mode of the uplink transmission is dynamic scheduling, and the scheduling mode of the downlink reception is dynamic scheduling, the network device indicates, by using DCI used for dynamic scheduling, a priority of data scheduled by using the DCI. For this example, a problem may occur: If a priority indicated by DCI for scheduling uplink data is the same as a priority indicated by DCI for scheduling downlink data, it may be predefined in a protocol that when this scenario occurs, whether to cancel the uplink transmission or the downlink reception is determined based on an implementation of the terminal device, or whether to perform the uplink transmission or the downlink reception is determined based on an implementation of the terminal device. In other words, the protocol predefines whether to cancel the uplink transmission or the downlink reception when this scenario occurs, or the protocol predefines whether to perform the uplink transmission or the downlink reception when this scenario occurs.

In an example, when the scheduling mode of the uplink transmission is dynamic scheduling, and the scheduling mode of the downlink reception is dynamic scheduling, whether the uplink transmission is preferred or the downlink reception is preferred may be predefined in a protocol, or whether the uplink transmission is canceled or the downlink reception is canceled may be predefined in a protocol, or whether the uplink transmission is performed or the downlink reception is performed may be predefined in a protocol.

In an example, when the scheduling mode of the uplink transmission is semi-persistent scheduling, and the scheduling mode of the downlink reception is semi-persistent scheduling, although the uplink transmission is semi-persistently scheduled, the uplink transmission may be activated by using DCI or a MAC CE, and the priority of the uplink transmission and the priority of the downlink reception may be indicated in the DCI or the MAC CE for activating the uplink transmission.

In an example, when the scheduling mode of the uplink transmission is semi-persistent scheduling, and the scheduling mode of the downlink reception is semi-persistent scheduling, if the uplink transmission directly takes effect after being configured by using higher layer signaling, the priority of the uplink transmission and the priority of the downlink reception may be indicated by using the higher layer signaling.

In an example, when the scheduling mode of the uplink transmission is semi-persistent scheduling, and the scheduling mode of the downlink reception is semi-persistent scheduling, whether the uplink transmission is preferred or the downlink reception is preferred may be predefined in a protocol, or whether the uplink transmission is canceled or the downlink reception is canceled may be predefined in a protocol.

According to the foregoing solution, an incorrect scenario defined in the 5G protocol may not be an incorrect scenario in an NTN scenario. As the network device does not know actual data sending time of the terminal device, the downlink reception and the uplink transmission overlap during dynamic scheduling or semi-persistent scheduling. In this case, whether to cancel the uplink transmission or the downlink reception may be determined based on an indication of the network device or a protocol predefinition, or based on an implementation of the terminal device.

In some embodiments, the priority of the uplink transmission and the priority of the downlink reception may be determined according to a conflict handling rule defined in the 5G protocol, for example, the conflict handling rules shown in Case 1 to Case 7. In an example, in Case 1, it may be considered that a priority of dynamically scheduled downlink reception is higher than a priority of semi-persistently scheduled uplink transmission. In an example, in Case 2, it may be considered that a priority of dynamically scheduled uplink transmission is higher than a priority of semi-persistently scheduled downlink reception. In an example, in Case 5, it may be considered that a priority of dynamically scheduled or higher layer signaling-configured uplink transmission is lower than a priority of higher layer signaling-configured SSB reception. In an example, in Case 7, a priority of a higher layer signaling-configured PUSCH, PUCCH, or SRS is lower than a priority of an SSB.

In a possible case, for a scenario in which the uplink transmission needs to be canceled, the terminal device may cancel the uplink transmission in the first time unit and/or the second time unit according to the preset rule. For a scenario in which the downlink reception needs to be canceled, the terminal device may cancel the downlink reception in the first time unit and/or the second time unit based on the preset rule. Alternatively, as the network device already sends downlink data to the terminal device, the terminal device may attempt to receive the downlink data in the first time unit and/or the second time unit, and attempt to decode the downlink data. This is not specifically limited in this application.

Case 2: The preset rule includes conflict handling rules for different conflicts.

In Case 2, the conflict handling rules for different conflicts may be defined, for example, the conflict handling rules shown in Case 1 to Case 7. The following separately provides descriptions by using different examples.

Example 1: When dynamically scheduled downlink reception and semi-persistently scheduled uplink transmission overlap, the semi-persistently scheduled uplink transmission is canceled and/or the dynamically scheduled downlink reception is performed; or when dynamically scheduled uplink transmission and semi-persistently scheduled downlink reception overlap, the semi-persistently scheduled downlink reception is canceled and/or dynamically scheduled uplink reception is performed.

For example, as shown in FIG. 5A, in the first time unit, DL3 is for dynamically scheduled downlink reception, and UL7 is for semi-persistently scheduled uplink transmission. In this case, the terminal device may cancel the semi-persistently scheduled uplink transmission in the first time unit (UL7). For another example, as shown in FIG. 5A, in the second time unit, DL2 is for semi-persistently scheduled downlink reception, and UL9 is for dynamically scheduled uplink transmission. In this case, the terminal device may cancel the semi-persistently scheduled downlink reception in the second time unit (DL2).

Example 2: When semi-persistently scheduled downlink reception and higher layer signaling-configured uplink transmission overlap, the higher layer signaling-configured uplink transmission is canceled and/or the semi-persistently scheduled downlink reception is performed; or when semi-persistently scheduled uplink transmission and higher layer signaling-configured downlink reception overlap, the higher layer signaling-configured downlink reception is canceled and/or the semi-persistently scheduled uplink transmission is performed.

For example, as shown in FIG. 5A, in the first time unit, DL3 is for semi-persistently scheduled downlink reception, and UL7 is for higher layer signaling-configured uplink transmission. In this case, the terminal device may cancel the higher layer signaling-configured uplink transmission in the first time unit (UL7). For another example, as shown in FIG. 5A, in the second time unit, DL2 is for higher layer signaling-configured downlink reception, and UL9 is for semi-persistently scheduled uplink transmission. In this case, the terminal device may cancel the higher layer signaling-configured downlink reception in the second time unit (DL2).

Example 3: When dynamically scheduled downlink reception and higher layer signaling-configured uplink transmission overlap, the higher layer signaling-configured uplink transmission is canceled and/or the dynamically scheduled downlink reception is performed; or when dynamically scheduled uplink transmission and higher layer signaling-configured downlink reception overlap, the higher layer signaling-configured downlink reception is canceled and/or the dynamically scheduled uplink transmission is performed.

For example, as shown in FIG. 5A, in the first time unit, DL3 is for dynamically scheduled downlink reception, and UL7 is for higher layer signaling-configured uplink transmission. In this case, the terminal device may cancel the higher layer signaling-configured uplink transmission in the first time unit (UL7). For another example, as shown in FIG. 5A, in the second time unit, DL2 is for higher layer signaling-configured downlink reception, and UL9 is for dynamically scheduled uplink transmission. In this case, the terminal device may cancel the higher layer signaling-configured downlink reception in the second time unit (DL2).

Example 4: When higher layer signaling-configured SSB reception conflicts with dynamically scheduled, semi-persistently scheduled, or higher layer signaling-configured uplink transmission, the dynamically scheduled, semi-persistently scheduled, or higher layer signaling-configured uplink transmission is canceled and/or the SSB reception is performed.

For example, when the SSB reception and the uplink transmission overlap, the uplink transmission is canceled or the SSB reception is performed. For example, when the SSB reception and the dynamically scheduled uplink transmission overlap, the dynamically scheduled uplink transmission is canceled and/or the SSB reception is performed. For example, when the SSB reception and the semi-persistently scheduled uplink transmission overlap, the semi-persistently scheduled uplink transmission is canceled and/or the SSB reception is performed. For example, when the SSB reception and the higher layer signaling-configured uplink transmission overlap, the higher layer signaling-configured uplink transmission is canceled and/or the SSB reception is performed. For example, when the SSB reception and the semi-persistently scheduled uplink transmission and the higher layer signaling-configured uplink transmission overlap, the semi-persistently scheduled uplink transmission and the higher layer signaling-configured uplink transmission are canceled and/or the SSB reception is performed.

For example, as shown in FIG. 5A, UL7 is for a PDCCH-triggered PRACH, PUSCH, PUCCH, or SRS. When UL7 conflicts with an SSB in DL3, the terminal device cancels sending of a RACH, the PUSCH, or the PUCCH in UL7.

Example 5: When dynamically scheduled or semi-persistently scheduled downlink reception conflicts with a valid RO, uplink transmission on the valid RO is canceled or the dynamically scheduled or semi-persistently scheduled downlink reception is performed.

For example, as shown in FIG. 5A, UL7 is a valid RO. When UL7 conflicts with dynamically scheduled or semi-persistently scheduled downlink reception in DL3, the terminal device cancels uplink transmission in UL7, or cancels the dynamically scheduled or semi-persistently scheduled downlink reception in DL3; or cancels uplink transmission in UL7 based on an implementation of the terminal device, or cancels the dynamically scheduled or semi-persistently scheduled downlink reception in DL3.

Example 6: When a last symbol of higher layer signaling-configured uplink transmission is not earlier than time of *N*_{Tx-Rx} · *T*_{c} before a next SSB, the higher layer signaling-configured uplink transmission is canceled and/or SSB reception is performed.

For example, as shown in FIG. 5A, UL7 is a resource for a higher layer signaling-configured PUCCH, PUSCH, or SRS, and DL3 is a resource for a next SSB. A last symbol of UL7 is not earlier than time of *N*_{Tx-Rx} · *T*_{c} of DL3. Therefore, the terminal device can cancel sending of the PUCCH, the PUSCH, or the SRS in UL7.

Example 7: When a start symbol of a PRACH or a MsgA PUSCH is earlier than time of *N*_{Rx-Tx} · *T*_{c} of a last symbol of a higher layer signaling-configured PDCCH, PDSCH, CSI-RS, DL-PRS, or SSB, and an end symbol of the PRACH or the MsgA PUSCH is later than time of *N*_{Tx-Rx} · *T*_{c} of a first symbol of the higher layer signaling-configured PDCCH, PDSCH, CSI-RS, DL-PRS, or SSB, the terminal device cancels sending of the PRACH or the MsgA PUSCH (or performs reception of the PDCCH, the PDSCH, a CSI-RSD, the DL-PRS, or the SSB); or the terminal device cancels reception of the higher layer signaling-configured PDCCH, PDSCH, CSI-RS, DL-PRS, or SSB (or performs sending of the PRACH or the MsgA PUSCH); or cancels sending of the PRACH or the MsgA PUSCH based on an implementation of the terminal device, or cancels reception of the higher layer signaling-configured PDCCH, PDSCH, CSI-RS, DL-PRS, or SSB; or performs sending of the PDCCH and the PDSCH, or the PRACH or the MsgA PUSCH based on an implementation of the terminal device.

Based on the foregoing Case 2, the terminal device can determine, according to a rule predefined in a protocol, whether to cancel the uplink transmission or the downlink reception.

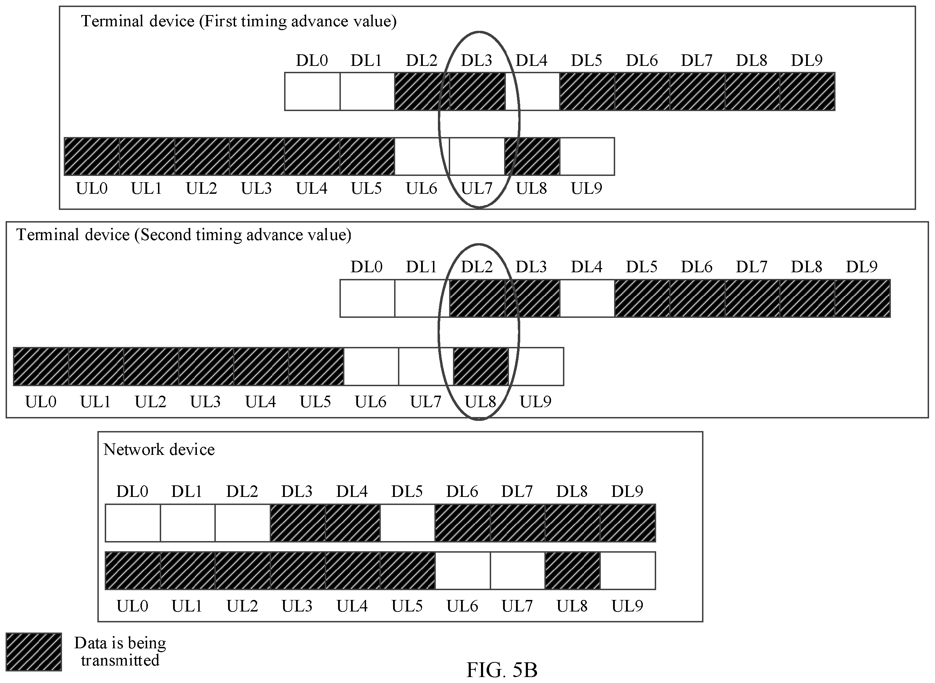

In some implementations, refer to FIG. 5B. When the terminal device considers, based on the first timing advance value, that the uplink transmission and the downlink reception of the terminal device do not overlap, the terminal device may cancel the downlink reception in the second time unit or cancel the uplink transmission in the second time unit. In other words, when the network device considers that the uplink transmission and the downlink reception of the terminal device do not overlap, the terminal device may cancel an actual conflict.

It should be noted that in FIG. 5A, an example in which resources used for the uplink transmission are UL0 to UL9 is used for description, and an example in which resources used for the downlink reception are DL0 to DL9 is used for description. UL0 to UL9 shown in FIG. 5A cannot constitute a limitation on the resources used for the uplink transmission, and DL0 to DL9 shown in FIG. 5A cannot constitute a limitation on the resources used for the downlink reception.

S404: The network device cancels uplink reception or downlink transmission in the first time unit according to the preset rule.

This step is an optional step, and is shown by using a dashed line in FIG. 4. Execution of S404 is not actually limited in this embodiment of this application. S404 may be performed after S402 and before S403, or may be performed after S403. As shown in FIG. 5A, for a manner in which the network device cancels the uplink reception in the first time unit or cancels the downlink transmission in the first time unit according to the preset rule, refer to the manner in which the terminal device cancels the uplink transmission in the first time unit or cancels the downlink reception in the first time unit according to the preset rule for implementation. Details are not described in this application.

Optionally, refer to FIG. 5B. When the network device considers, based on the first timing advance value, that the uplink transmission and the downlink reception of the terminal device do not overlap, the network device may perform the uplink reception and the downlink transmission based on the time sequence relationship determined by using the first timing advance value.

It may be understood that for a scenario in which the network device needs to cancel the downlink transmission, the network device may cancel the downlink transmission in the first time unit according to the preset rule, or the network device may send downlink data without canceling the downlink transmission. This is not specifically limited in this application.

In a possible case, when the network device cancels the uplink reception in the first time unit, the network device may schedule a resource used for the uplink reception to another terminal device for uplink transmission. For example, as shown in FIG. 5A, when the network device cancels uplink reception in UL7, the network device may schedule UL7 to another terminal device for uplink transmission. Similarly, when the network device cancels the downlink transmission in the first time unit, the network device may schedule a resource used for the downlink transmission to another terminal device for downlink reception. For example, as shown in FIG. 5A, when the network device cancels downlink transmission in DL3, the network device may schedule DL3 to another terminal device for downlink reception.

In some embodiments, the first timing advance value reported by the terminal device may have an error. Therefore, the network device can determine a first timing advance range based on the first timing advance value. For example, in S401, the terminal device reports TA=TA0 to the network device, and the network device may consider that a timing advance value range of the terminal device is TA0-TA' to TA0+TA'. The network device may determine a conflict situation based on a TA within this range. Therefore, the terminal device can continue to use a rule of the network device, to determine the conflict situation perceived by the network device.

For example, within the range of TA0-TA' to TA0+TA', there may be a plurality of situations of TAs of the terminal device, for example, TA1, TA2, and TA0. In this case, the terminal device may determine, based on TA1, whether the uplink transmission and the downlink reception overlap. Similarly, the terminal device also determines, based on TA0 and TA2, whether the uplink transmission and the downlink reception of the terminal device overlap.

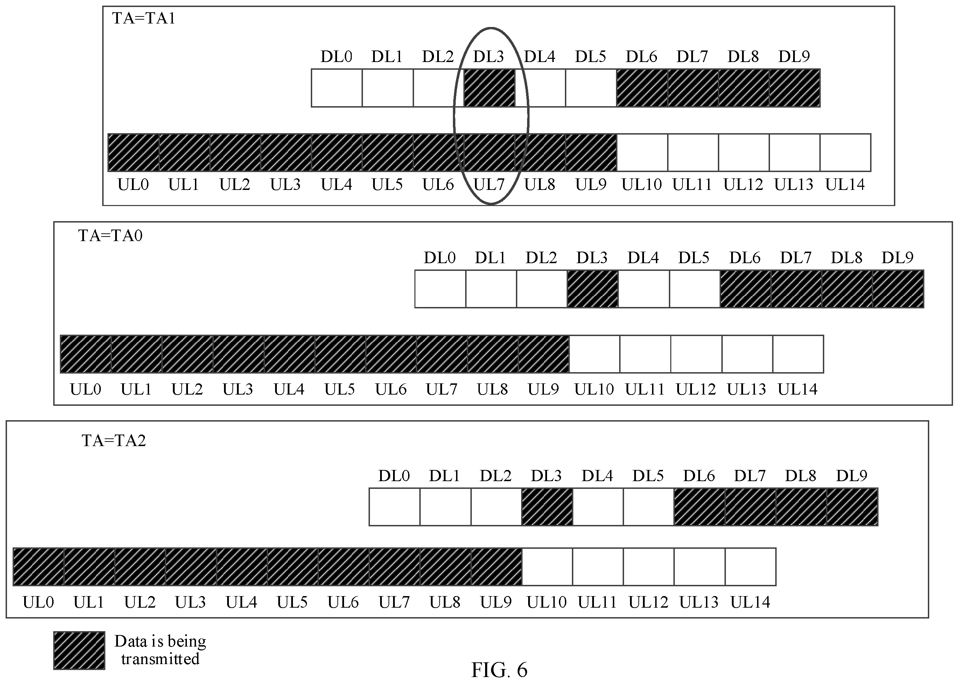

Refer to FIG. 6. When the uplink transmission and the downlink reception of the terminal device do not overlap when TA=TA0, and the uplink transmission and the downlink reception of the terminal device overlap when TA=TA1, uplink transmission in UL7 and downlink reception in DL3 overlap. The uplink transmission and the downlink reception do not overlap when TA=TA2. In other words, within the range of TA0-TA' to TA0+TA', the downlink reception and the uplink transmission of the terminal device may overlap. In this case, the terminal device may cancel the downlink reception in the second time unit or cancel the uplink transmission in the second time unit. For the uplink transmission in UL7, the terminal device may send uplink data in UL7. For the downlink reception in DL3, the terminal device may receive downlink data in DL3.

In this case, the network device does not schedule an overlapping resource to another terminal device. For example, the network device does not schedule UL7 to another terminal device for uplink transmission, or the network device does not schedule DL3 to another terminal device for downlink reception.

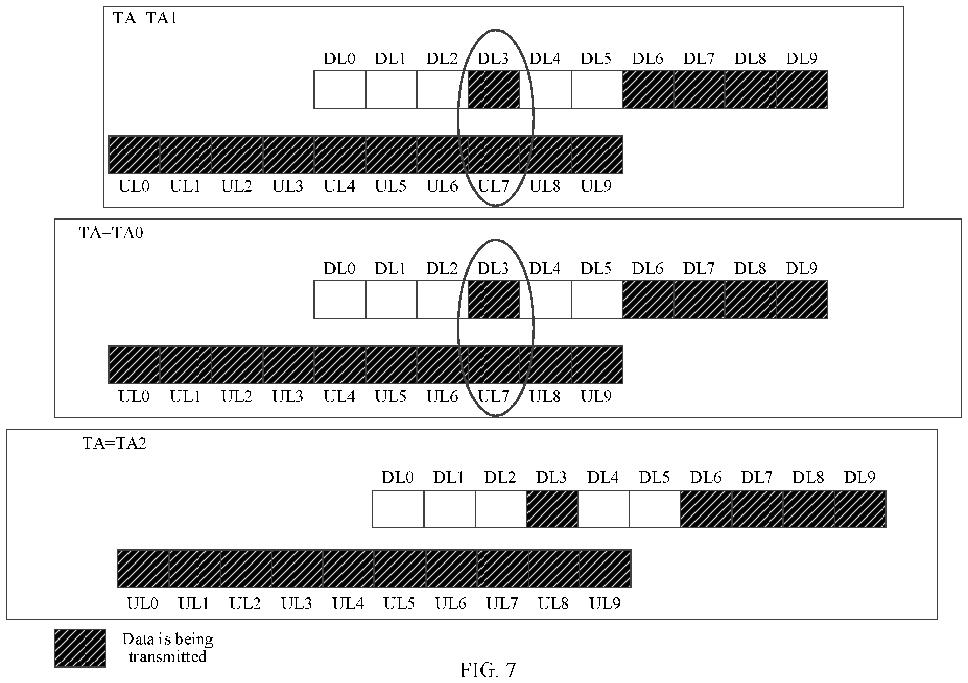

Refer to FIG. 7. When the uplink transmission and the downlink reception of the terminal device overlap when TA=TA0, uplink transmission in UL7 and downlink reception in DL3 overlap. When the uplink transmission and the downlink reception of the terminal device overlap when TA=TA1, the uplink transmission in UL7 and the downlink reception in DL3 overlap. When the uplink transmission and the downlink reception overlap when TA=TA2, uplink transmission in UL8 and the downlink reception in DL3 overlap. In other words, within the range of TA0-TA' to TA0+TA', the downlink reception and the uplink transmission of the terminal device certainly overlap. In this case, the terminal device may cancel the downlink reception in the first time unit or cancel the uplink transmission in the first time unit, and cancel the downlink reception in the second time unit or cancel the uplink transmission in the second time unit.

For example, the terminal device may cancel the uplink transmission in UL7 or the downlink reception in DL3, and cancel the uplink transmission in UL8 or the downlink reception in DL3.

In this case, the network device may schedule an overlapping resource to another terminal device. For example, the network device schedules UL6 or DL4 to another terminal device, schedules UL7 or DL3 to another terminal device, and schedules UL7 or DL4 to another terminal device.

In this case, the terminal device may further determine, based on the second timing advance value, whether the uplink transmission and the downlink reception overlap. If the uplink transmission and the downlink reception overlap in the second time unit, the terminal device may cancel the uplink transmission or the downlink reception in the second time unit. For details, refer to S403. Details are not described herein again.

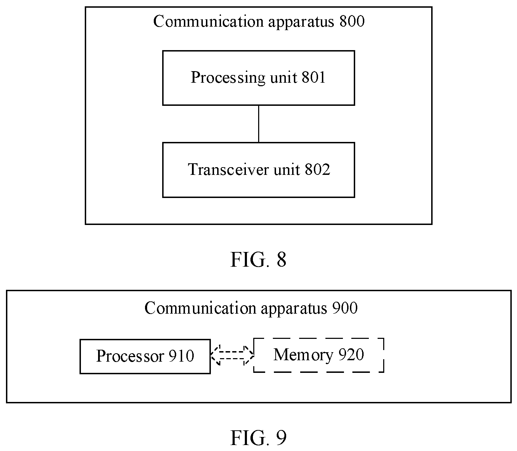

Based on the concept of the foregoing embodiments, refer to FIG. 8. An embodiment of this application provides a communication apparatus 800. The apparatus 800 includes a processing unit 801 and a transceiver unit 802. The apparatus 800 may be a communication apparatus, or may be an apparatus that is used in a communication apparatus and that can support the communication apparatus in performing a method for quality of service parameter notification.

The transceiver unit may also be referred to as a transceiver module, a transceiver, a transceiver machine, a transceiver apparatus, or the like. The processing unit may also be referred to as a processor, a processing board, a processing unit, a processing apparatus, or the like. Optionally, a component that is in the transceiver unit and that is configured to implement a receiving function may be considered as a receiving unit. It should be understood that the transceiver unit is configured to perform a sending operation and a receiving operation of the communication apparatus in the foregoing method embodiments. A component that is in the transceiver unit and that is configured to implement a sending function is considered as a sending unit. That is, the transceiver unit includes the receiving unit and the sending unit.

In addition, it should be noted that, if the apparatus is implemented by using a chip or a chip circuit, the transceiver unit may be an input/output circuit and/or a communication interface, and perform an input operation (corresponding to the foregoing receiving operation) and an output operation (corresponding to the foregoing sending operation). The processing unit is an integrated processor, a microprocessor, or an integrated circuit.

The following describes in detail an implementation in which the apparatus 800 is used in a terminal device and a network device.

For example, operations performed by the units of the apparatus 800 when the apparatus 800 is used in the terminal device are described in detail.

In an optional implementation, the communication apparatus 800 may be used in the terminal device, to perform the method performed by the foregoing terminal device, specifically, for example, the method performed by the terminal device in the embodiment shown in the foregoing FIG. 4.

For example, the transceiver unit 802 is configured to send a first timing advance value. The processing unit 801 is configured to determine, based on the first timing advance value, a first time unit in which uplink transmission and downlink reception overlap, and determine, based on a second timing advance value, a second time unit in which uplink transmission and downlink reception overlap. The first time unit and the second time unit do not overlap. The processing unit 801 is further configured to cancel the uplink transmission in the first time unit and the uplink transmission in the second time unit according to a preset rule. Alternatively, the processing unit 801 is further configured to cancel the uplink transmission in the first time unit and the downlink reception in the second time unit according to a preset rule. Alternatively, the processing unit 801 is further configured to cancel the downlink reception in the first time unit and the uplink transmission in the second time unit according to a preset rule. Alternatively, the processing unit 801 is further configured to cancel the downlink reception in the first time unit and the downlink reception in the second time unit according to a preset rule.

For example, operations performed by the units of the apparatus 800 when the apparatus 800 is used in the network device are described in detail.

In an optional implementation, the communication apparatus 800 may be used in the network device, to perform the method performed by the foregoing network device, specifically, for example, the method performed by the network device in the embodiment shown in the foregoing FIG. 4.

For example, the transceiver unit 802 is configured to receive a first timing advance value. The processing unit 801 is configured to determine, based on the first timing advance value, a first time unit in which uplink transmission and downlink reception overlap. The processing unit 801 is further configured to cancel uplink reception in the first time unit or cancel downlink transmission in the first time unit according to a preset rule.

Based on the concept of embodiments, as shown in FIG. 9, an embodiment of this application provides a communication apparatus 900. The communication apparatus 900 includes a processor 910. Optionally, the communication apparatus 900 may further include a memory 920, configured to store instructions executed by the processor 910, or store input data required by the processor 910 to run instructions, or store data generated after the processor 910 runs instructions. The processor 910 may implement, by using the instructions stored in the memory 920, the methods shown in the foregoing method embodiments.

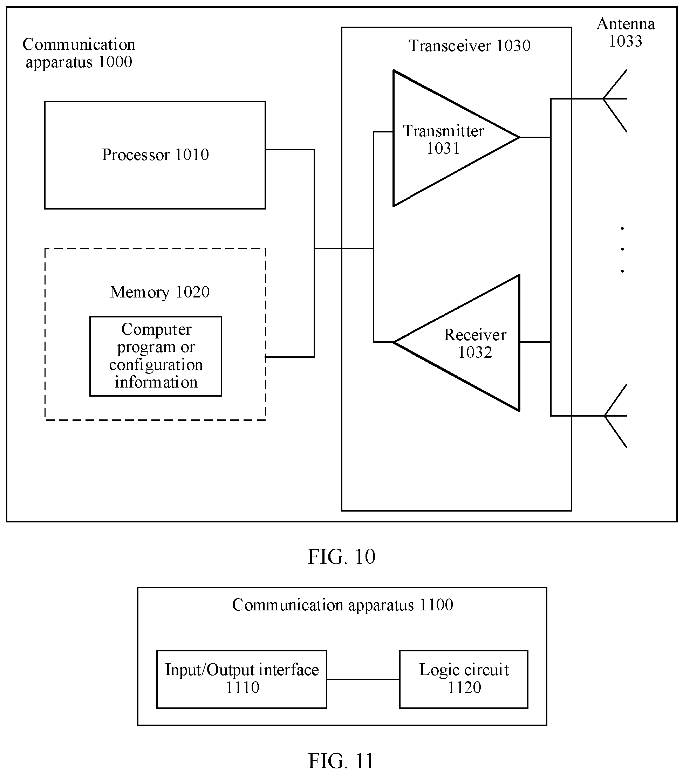

Based on the concept of embodiments, as shown in FIG. 10, an embodiment of this application provides a communication apparatus 1000. The communication apparatus 1000 may be a chip or a chip system. Optionally, in this embodiment of this application, the chip system may include a chip, or may include a chip and another discrete component.

The communication apparatus 1000 may include at least one processor 1010. The processor 1010 is coupled to a memory. Optionally, the memory may be located inside or outside the apparatus. For example, the communication apparatus 1000 may further include at least one memory 1020. The memory 1020 stores a computer program, configuration information, a computer program or instructions, and/or data necessary for implementing any one of the foregoing embodiments. The processor 1010 may execute the computer program stored in the memory 1020, to complete the method in any one of the foregoing embodiments. Optionally, the memory may be integrated with the processor.

The coupling in this embodiment of this application may be an indirect coupling or a communication connection between apparatuses, units, or modules in an electrical form, a mechanical form, or another form, and is used for information exchange between the apparatuses, the units, or the modules. The processor 1010 may cooperate with the memory 1020. In this embodiment of this application, a specific connection medium between a transceiver 1030, the processor 1010, and the memory 1020 is not limited.

The communication apparatus 1000 may further include the transceiver 1030, and the communication apparatus 1000 may perform information exchange with another device by using the transceiver 1030. The transceiver 1030 may be a circuit, a bus, a transceiver, or any other apparatus that can be configured to exchange information, or is referred to as a signal transceiver unit. As shown in FIG. 10, the transceiver 1030 includes a transmitter 1031, a receiver 1032, and an antenna 1033. In addition, when the communication apparatus 1000 is a chip type apparatus or circuit, the transceiver in the communication apparatus 1000 may alternatively be an input/output circuit and/or a communication interface, and may input data (or is referred to as receiving data) and output data (or is referred to as sending data). The processor is an integrated processor, a microprocessor, or an integrated circuit, and the processor may determine output data based on input data.

In a possible implementation, the communication apparatus 1000 may be used in a communication apparatus. Specifically, the communication apparatus 1000 may be a communication apparatus, or may be an apparatus that can support a communication apparatus in implementing a function of the terminal device or the network device in any one of the foregoing embodiments. The memory 1020 stores a computer program, a computer program or instructions, and/or data necessary for implementing a function of the terminal device or the network device in any one of the foregoing embodiments. The processor 1010 may execute the computer program stored in the memory 1020, to complete the method performed by the terminal device or the network device in any one of the foregoing embodiments.

In embodiments of this application, the processor may be a general-purpose processor, a digital signal processor, an application-specific integrated circuit, a field programmable gate array or another programmable logic component, a discrete gate or transistor logic component, or a discrete hardware component, and may implement or execute the methods, steps, and logical block diagrams disclosed in embodiments of this application. The general-purpose processor may be a microprocessor or any conventional processor or the like. The steps of the method disclosed with reference to embodiments of this application may be directly performed by a hardware processor, or may be performed by using a combination of hardware in the processor and a software module.

In embodiments of this application, the memory may be a non-volatile memory, for example, a hard disk drive (hard disk drive, HDD) or a solid-state drive (solid-state drive, SSD), or may be a volatile memory (volatile memory), for example, a random access memory (random access memory, RAM). Alternatively, the memory may be any other medium that can be configured to carry or store expected program code in a form of an instruction structure or a data structure and that can be accessed by a computer, but is not limited thereto. The memory in embodiments of this application may alternatively be a circuit or any other apparatus that can implement a storage function, and is configured to store a computer program, a computer program or instructions, and/or data.

Based on the foregoing embodiments, refer to FIG. 11. An embodiment of this application further provides another communication apparatus 1100. The communication apparatus includes an input/output interface 1110 and a logic circuit 1120. The input/output interface 1110 is configured to receive code instructions and transmit the code instructions to the logic circuit 1120; and the logic circuit 1120 is configured to run the code instructions to perform the method performed by the terminal device or the network device in any one of the foregoing embodiments.

The following describes in detail operations performed by the apparatus 1100 when the apparatus 1100 is used in the terminal device or the network device.

In an optional implementation, the communication apparatus 1100 may be used in the terminal device, to perform the method performed by the foregoing terminal device, specifically, for example, the method performed by the terminal device in the embodiment shown in the foregoing FIG. 4.

For example, the input/output interface 1110 is configured to output a first timing advance value. The logic circuit 1120 is configured to determine, based on the first timing advance value, a first time unit in which uplink transmission and downlink reception overlap, and determine, based on a second timing advance value, a second time unit in which uplink transmission and downlink reception overlap. The first time unit and the second time unit do not overlap. The logic circuit 1120 is further configured to cancel the uplink transmission in the first time unit and the uplink transmission in the second time unit according to a preset rule. Alternatively, the logic circuit 1120 is further configured to cancel the uplink transmission in the first time unit and the downlink reception in the second time unit according to a preset rule. Alternatively, the logic circuit 1120 is further configured to cancel the downlink reception in the first time unit and the uplink transmission in the second time unit according to a preset rule. Alternatively, the logic circuit 1120 is further configured to cancel the downlink reception in the first time unit and the downlink reception in the second time unit according to a preset rule.

The communication apparatus 1100 provided in this embodiment may be used in the terminal device, to perform the method performed by the foregoing terminal device. Therefore, for technical effects that can be achieved by the communication apparatus, refer to the foregoing method embodiments. Details are not described herein again.

In an optional implementation, the communication apparatus 1100 may be used in the network device, to perform the method performed by the foregoing network device, specifically, for example, the method performed by the network device in the embodiment shown in the foregoing FIG. 4.

For example, the input/output interface 1110 is configured to input a first timing advance value. The logic circuit 1120 determines, based on the first timing advance value, a first time unit in which uplink transmission and downlink reception overlap. The logic circuit 1120 is further configured to cancel uplink reception in the first time unit or cancel downlink transmission in the first time unit according to a preset rule.

The communication apparatus 1100 provided in this embodiment may be used in the network device, to perform the method performed by the foregoing network device. Therefore, for technical effects that can be achieved by the communication apparatus, refer to the foregoing method embodiments. Details are not described herein again.

Based on the foregoing embodiments, an embodiment of this application further provides a communication system. The system includes at least one network device and at least one terminal device. For technical effect that can be achieved, refer to the foregoing method embodiments. Details are not described herein again.

Based on the foregoing embodiments, an embodiment of this application further provides a computer-readable storage medium. The computer-readable storage medium stores a computer program or instructions. When the instructions are executed, the method performed by the communication apparatus in any one of the foregoing embodiments is implemented. The computer-readable storage medium may include any medium that can store program code, for example, a USB flash drive, a removable hard disk drive, a read-only memory, a random access memory, a magnetic disk, or an optical disc.

To implement the functions of the communication apparatus in the foregoing FIG. 8 to FIG. 11, an embodiment of this application further provides a chip. The chip includes a processor and is configured to support the communication apparatus in implementing the functions of the terminal device or the network device in the foregoing method embodiments. In a possible design, the chip is connected to a memory, or the chip includes a memory. The memory is configured to store a computer program or instructions and data that are necessary for the terminal device or the network device.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to embodiments of this application. It should be understood that a computer program or instructions may be used to implement each procedure and/or each block in the flowcharts and/or the block diagrams and a combination of a procedure and/or a block in the flowcharts and/or the block diagrams. The computer program or the instructions may be provided for a general-purpose computer, a dedicated computer, an embedded processor, or a processor of another programmable data processing device to generate a machine, so that the instructions executed by the computer or the processor of another programmable data processing device generate an apparatus for implementing a specific function in one or more procedures in the flowcharts and/or in one or more blocks in the block diagrams.

The computer program or the instructions may alternatively be stored in a computer-readable memory that can indicate the computer or the another programmable data processing device to operate in a specific manner, so that the instructions stored in the computer-readable memory generate an artifact that includes an instruction apparatus. The instruction apparatus implements a specific function in one or more procedures in the flowcharts and/or in one or more blocks in the block diagrams.

The computer program or the instructions may alternatively be loaded onto the computer or the another programmable data processing device, so that a series of operation steps are performed on the computer or the another programmable device to generate computerimplemented processing. Therefore, the instructions executed on the computer or the another programmable device provide steps for implementing a specific function in one or more procedures in the flowcharts and/or in one or more blocks in the block diagrams.

It is clear that a person skilled in the art can make various modifications and variations to embodiments of this application without departing from the scope of embodiments of this application. In this case, this application is intended to cover these modifications and variations of embodiments of this application provided that they fall within the scope of the claims of this application and their equivalent technologies.

## Claims

1. A communication method, comprising:
determining, based on a first timing advance value, a first time unit in which uplink transmission and downlink reception overlap, and determining, based on a second timing advance value, a second time unit in which uplink transmission and downlink reception overlap, wherein the first timing advance value is a reported timing advance value, and the first time unit and the second time unit do not overlap; and
canceling the uplink transmission in the first time unit and the uplink transmission in the second time unit according to a preset rule; or canceling the uplink transmission in the first time unit and the downlink reception in the second time unit according to a preset rule; or canceling the downlink reception in the first time unit and the uplink transmission in the second time unit according to a preset rule; or canceling the downlink reception in the first time unit and the downlink reception in the second time unit according to a preset rule.

2. The method according to claim 1, wherein the overlap between the uplink transmission and the downlink reception comprises one or more of the following:
a time unit used for the uplink transmission and a time unit used for the downlink reception partially or completely overlap, or a time interval between the uplink transmission and the downlink reception is less than a predefined first time interval, or a time interval between the downlink reception and the uplink transmission is less than a predefined second time interval.

3. The method according to claim 1 or 2, wherein canceling the downlink reception in the first time unit or canceling the uplink transmission in the first time unit is determined based on a priority of the downlink reception in the first time unit and a priority of the uplink transmission in the first time unit; and/or canceling the downlink reception in the second time unit or canceling the uplink transmission in the second time unit is determined based on a priority of the downlink reception in the second time unit and a priority of the uplink transmission in the second time unit.

4. The method according to claim 3, wherein the priorities are determined based on a scheduling mode, and the scheduling mode comprises at least two of the following: dynamic scheduling, higher layer signaling configuration, or semi-persistent scheduling.

5. The method according to claim 3 or 4, wherein a priority of synchronization signal block SSB reception is higher than one or more of the following: a priority of dynamically scheduled uplink transmission, a priority of semi-persistently scheduled uplink transmission, or a priority of higher layer signaling-configured uplink transmission.

6. The method according to any one of claims 1 to 5, wherein the determining, based on the first timing advance value, the first time unit in which the uplink transmission and the downlink reception overlap comprises:
determining a third time unit based on a first timing advance range, wherein the first timing advance range is determined based on the first timing advance value, and
the third time unit comprises a plurality of first time units; or
the third time unit comprises one or more first time units and a non-overlapping time unit, and the method further comprises: canceling the uplink transmission in the second time unit or canceling the downlink reception in the second time unit according to the preset rule.

7. The method according to claim 1 or 2, wherein the preset rule comprises:
when dynamic scheduling and semi-persistent scheduling overlap, canceling the semi-persistent scheduling; or
when dynamic scheduling and higher layer signaling configuration overlap, canceling the higher layer signaling configuration; or
when higher layer signaling configuration and semi-persistent scheduling overlap, canceling the higher layer signaling configuration; or
when synchronization signal block SSB reception and dynamically scheduled uplink transmission overlap, canceling the dynamically scheduled uplink transmission; or
when synchronization signal block SSB reception and semi-persistently scheduled uplink transmission overlap, canceling the semi-persistently scheduled uplink transmission; or
when synchronization signal block SSB reception and higher layer signaling-configured uplink transmission overlap, canceling the higher layer signaling-configured uplink transmission.

8. The method according to any one of claims 1 to 6, further comprising:
receiving first indication information, wherein the first indication information comprises the preset rule, and the preset rule is that when semi-persistently scheduled downlink reception conflicts with semi-persistently scheduled uplink transmission, the semi-persistently scheduled downlink reception or the semi-persistently scheduled uplink transmission is canceled.

9. The method according to claim 8, wherein the first indication information is carried in downlink control information, a media access control control element, or higher layer signaling.

10. The method according to any one of claims 1 to 6, further comprising:
receiving second indication information, wherein the second indication information comprises the preset rule, and the preset rule is that when dynamically scheduled downlink reception conflicts with dynamically scheduled uplink transmission, the dynamically scheduled downlink reception or the dynamically scheduled uplink transmission is canceled.

11. The method according to claim 10, wherein the second indication information is carried in downlink control information, a media access control control element, or higher layer signaling.

12. The method according to claim 1 or 2, wherein the preset rule comprises:
when semi-persistently scheduled downlink reception conflicts with semi-persistently scheduled uplink transmission, canceling the semi-persistently scheduled downlink reception or the semi-persistently scheduled uplink transmission; or
when dynamically scheduled downlink reception conflicts with dynamically scheduled uplink transmission, canceling the dynamically scheduled downlink reception or the dynamically scheduled uplink transmission.

13. A communication method, comprising:
determining, based on a first timing advance value, a first time unit in which uplink transmission and downlink reception overlap; and
canceling uplink reception in the first time unit or canceling downlink transmission in the first time unit according to a preset rule.

14. The method according to claim 13, wherein the overlap between the uplink transmission and the downlink reception comprises one or more of the following:
a time unit used for the uplink transmission and a time unit used for the downlink reception partially or completely overlap, or a time interval between the uplink transmission and the downlink reception is less than a predefined first time interval, or a time interval between the downlink reception and the uplink transmission is less than a predefined second time interval.

15. The method according to claim 13 or 14, wherein canceling the downlink reception in the first time unit or canceling the uplink transmission in the first time unit is determined based on a priority of the downlink reception in the first time unit and a priority of the uplink transmission in the first time unit.

16. The method according to claim 15, wherein the priorities are determined based on a scheduling mode, and the scheduling mode comprises at least two of the following: dynamic scheduling, higher layer signaling configuration, or semi-persistent scheduling.

17. The method according to claim 15 or 16, wherein a priority of synchronization signal block SSB reception is higher than one or more of the following: a priority of dynamically scheduled uplink transmission, a priority of semi-persistently scheduled uplink transmission, or a priority of higher layer signaling-configured uplink transmission.

18. The method according to any one of claims 13 to 17, wherein the determining, based on the first timing advance value, the first time unit in which the uplink transmission and the downlink reception overlap comprises:
determining a third time unit based on a first timing advance range, wherein the first timing advance range is determined based on the first timing advance value, and
the third time unit comprises a plurality of first time units.

19. The method according to claim 13 or 14, wherein the preset rule comprises:
when dynamic scheduling and semi-persistent scheduling overlap, canceling the semi-persistent scheduling; or
when dynamic scheduling and higher layer signaling configuration overlap, canceling the higher layer signaling configuration; or
when higher layer signaling configuration and semi-persistent scheduling overlap, canceling the higher layer signaling configuration; or
when synchronization signal block SSB reception and dynamically scheduled uplink transmission overlap, canceling the dynamically scheduled uplink transmission; or
when synchronization signal block SSB reception and semi-persistently scheduled uplink transmission overlap, canceling the semi-persistently scheduled uplink transmission; or
when synchronization signal block SSB reception and higher layer signaling-configured uplink transmission overlap, canceling the higher layer signaling-configured uplink transmission.

20. The method according to any one of claims 13 to 18, further comprising:
sending first indication information, wherein the first indication information comprises the preset rule, and the preset rule is that when semi-persistently scheduled downlink reception conflicts with semi-persistently scheduled uplink transmission, the semi-persistently scheduled downlink reception or the semi-persistently scheduled uplink transmission is canceled.

21. The method according to claim 20, wherein the first indication information is carried in downlink control information, a media access control control element, or higher layer signaling.

22. The method according to any one of claims 13 to 18, further comprising:
sending second indication information, wherein the second indication information comprises the preset rule, and the preset rule is that when dynamically scheduled downlink reception conflicts with dynamically scheduled uplink transmission, the dynamically scheduled downlink reception or the dynamically scheduled uplink transmission is canceled.

23. The method according to claim 22, wherein the second indication information is carried in downlink control information, a media access control control element, or higher layer signaling.

24. The method according to claim 13 or 14, wherein the preset rule comprises:
when semi-persistently scheduled downlink reception conflicts with semi-persistently scheduled uplink transmission, canceling the semi-persistently scheduled downlink reception or the semi-persistently scheduled uplink transmission; or
when dynamically scheduled downlink reception conflicts with dynamically scheduled uplink transmission, canceling the dynamically scheduled downlink reception or the dynamically scheduled uplink transmission.

25. A communication apparatus, comprising:
a transceiver unit, configured to send a first timing advance value; and
a processing unit, configured to determine, based on the first timing advance value, a first time unit in which uplink transmission and downlink reception overlap, and determine, based on a second timing advance value, a second time unit in which uplink transmission and downlink reception overlap, wherein the first timing advance value is a reported timing advance value, and the first time unit and the second time unit do not overlap, wherein
the processing unit is further configured to cancel the uplink transmission in the first time unit and the uplink transmission in the second time unit according to a preset rule; or cancel the uplink transmission in the first time unit and the downlink reception in the second time unit according to a preset rule; or cancel the downlink reception in the first time unit and the uplink transmission in the second time unit according to a preset rule; or cancel the downlink reception in the first time unit and the downlink reception in the second time unit according to a preset rule.

26. The apparatus according to claim 25, wherein the overlap between the uplink transmission and the downlink reception comprises one or more of the following:
a time unit used for the uplink transmission and a time unit used for the downlink reception partially or completely overlap, or a time interval between the uplink transmission and the downlink reception is less than a predefined first time interval, or a time interval between the downlink reception and the uplink transmission is less than a predefined second time interval.

27. The apparatus according to claim 25 or 26, wherein canceling the downlink reception in the first time unit or canceling the uplink transmission in the first time unit is determined based on a priority of the downlink reception in the first time unit and a priority of the uplink transmission in the first time unit; and/or canceling the downlink reception in the second time unit or canceling the uplink transmission in the second time unit is determined based on a priority of the downlink reception in the second time unit and a priority of the uplink transmission in the second time unit.

28. The apparatus according to claim 27, wherein the priorities are determined based on a scheduling mode, and the scheduling mode comprises at least two of the following: dynamic scheduling, higher layer signaling configuration, or semi-persistent scheduling.

29. The apparatus according to claim 27 or 28, wherein a priority of synchronization signal block SSB reception is higher than one or more of the following: a priority of dynamically scheduled uplink transmission, a priority of semi-persistently scheduled uplink transmission, or a priority of higher layer signaling-configured uplink transmission.

30. The apparatus according to any one of claims 25 to 29, wherein the processing unit is specifically configured to:
determine a third time unit based on a first timing advance range, wherein the first timing advance range is determined based on the first timing advance value, and
the third time unit comprises a plurality of first time units; or
the third time unit comprises one or more first time units and a non-overlapping time unit, and the processing unit is further configured to cancel the uplink transmission in the second time unit or cancel the downlink reception in the second time unit according to the preset rule.

31. The apparatus according to claim 25 or 26, wherein the preset rule comprises:
when dynamic scheduling and semi-persistent scheduling overlap, canceling the semi-persistent scheduling; or
when dynamic scheduling and higher layer signaling configuration overlap, canceling the higher layer signaling configuration; or
when higher layer signaling configuration and semi-persistent scheduling overlap, canceling the higher layer signaling configuration; or
when synchronization signal block SSB reception and dynamically scheduled uplink transmission overlap, canceling the dynamically scheduled uplink transmission; or
when synchronization signal block SSB reception and semi-persistently scheduled uplink transmission overlap, canceling the semi-persistently scheduled uplink transmission; or
when synchronization signal block SSB reception and higher layer signaling-configured uplink transmission overlap, canceling the higher layer signaling-configured uplink transmission.

32. The apparatus according to any one of claims 25 to 30, wherein the transceiver unit is further configured to:
receive first indication information, wherein the first indication information comprises the preset rule, and the preset rule is that when semi-persistently scheduled downlink reception conflicts with semi-persistently scheduled uplink transmission, the semi-persistently scheduled downlink reception or the semi-persistently scheduled uplink transmission is canceled.

33. The apparatus according to claim 32, wherein the first indication information is carried in downlink control information, a media access control control element, or higher layer signaling.

34. The apparatus according to any one of claims 25 to 30, wherein the transceiver unit is further configured to:
receive second indication information, wherein the second indication information comprises the preset rule, and the preset rule is that when dynamically scheduled downlink reception conflicts with dynamically scheduled uplink transmission, the dynamically scheduled downlink reception or the dynamically scheduled uplink transmission is canceled.

35. The apparatus according to claim 34, wherein the second indication information is carried in downlink control information, a media access control control element, or higher layer signaling.

36. The apparatus according to claim 25 or 26, wherein the preset rule comprises:
when semi-persistently scheduled downlink reception conflicts with semi-persistently scheduled uplink transmission, canceling the semi-persistently scheduled downlink reception or the semi-persistently scheduled uplink transmission; or
when dynamically scheduled downlink reception conflicts with dynamically scheduled uplink transmission, canceling the dynamically scheduled downlink reception or the dynamically scheduled uplink transmission.

37. A communication apparatus, comprising:
a transceiver unit, configured to receive a first timing advance value; and
a processing unit, configured to determine, based on the first timing advance value, a first time unit in which uplink transmission and downlink reception overlap, wherein
the processing unit is further configured to cancel uplink reception in the first time unit or cancel downlink transmission in the first time unit according to a preset rule.

38. The apparatus according to claim 37, wherein the overlap between the uplink transmission and the downlink reception comprises one or more of the following:
a time unit used for the uplink transmission and a time unit used for the downlink reception partially or completely overlap, or a time interval between the uplink transmission and the downlink reception is less than a predefined first time interval, or a time interval between the downlink reception and the uplink transmission is less than a predefined second time interval.

39. The apparatus according to claim 37 or 38, wherein canceling the downlink reception in the first time unit or canceling the uplink transmission in the first time unit is determined based on a priority of the downlink reception in the first time unit and a priority of the uplink transmission in the first time unit.

40. The apparatus according to claim 39, wherein the priorities are determined based on a scheduling mode, and the scheduling mode comprises at least two of the following: dynamic scheduling, higher layer signaling configuration, or semi-persistent scheduling.

41. The apparatus according to claim 39 or 40, wherein a priority of synchronization signal block SSB reception is higher than one or more of the following: a priority of dynamically scheduled uplink transmission, a priority of semi-persistently scheduled uplink transmission, or a priority of higher layer signaling-configured uplink transmission.

42. The apparatus according to any one of claims 37 to 41, wherein the processing unit is specifically configured to:
determine a third time unit based on a first timing advance range, wherein the first timing advance range is determined based on the first timing advance value, and
the third time unit comprises a plurality of first time units.

43. The apparatus according to claim 37 or 38, wherein the preset rule comprises:
when dynamic scheduling and semi-persistent scheduling overlap, canceling the semi-persistent scheduling; or
when dynamic scheduling and higher layer signaling configuration overlap, canceling the higher layer signaling configuration; or
when higher layer signaling configuration and semi-persistent scheduling overlap, canceling the higher layer signaling configuration; or
when synchronization signal block SSB reception and dynamically scheduled uplink transmission overlap, canceling the dynamically scheduled uplink transmission; or
when synchronization signal block SSB reception and semi-persistently scheduled uplink transmission overlap, canceling the semi-persistently scheduled uplink transmission; or
when synchronization signal block SSB reception and higher layer signaling-configured uplink transmission overlap, canceling the higher layer signaling-configured uplink transmission.

44. The apparatus according to any one of claims 37 to 42, wherein the transceiver unit is further configured to:
send first indication information, wherein the first indication information comprises the preset rule, and the preset rule is that when semi-persistently scheduled downlink reception conflicts with semi-persistently scheduled uplink transmission, the semi-persistently scheduled downlink reception or the semi-persistently scheduled uplink transmission is canceled.

45. The apparatus according to claim 44, wherein the first indication information is carried in downlink control information, a media access control control element, or higher layer signaling.

46. The apparatus according to any one of claims 37 to 42, wherein the transceiver unit is further configured to:
send second indication information, wherein the second indication information comprises the preset rule, and the preset rule is that when dynamically scheduled downlink reception conflicts with dynamically scheduled uplink transmission, the dynamically scheduled downlink reception or the dynamically scheduled uplink transmission is canceled.

47. The apparatus according to claim 46, wherein the second indication information is carried in downlink control information, a media access control control element, or higher layer signaling.

48. The apparatus according to claim 37 or 38, wherein the preset rule comprises:
when semi-persistently scheduled downlink reception conflicts with semi-persistently scheduled uplink transmission, canceling the semi-persistently scheduled downlink reception or the semi-persistently scheduled uplink transmission; or
when dynamically scheduled downlink reception conflicts with dynamically scheduled uplink transmission, canceling the dynamically scheduled downlink reception or the dynamically scheduled uplink transmission.

49. A communication apparatus, comprising a processor, wherein the processor is coupled to a memory, the memory is configured to store a program or instructions, and when the program or the instructions are executed by the processor, the apparatus is caused to perform the method according to any one of claims 1 to 12, or the apparatus is caused to perform the method according to any one of claims 13 to 24.

50. A chip system, wherein the chip system comprises:
a communication interface; and
a processor, configured to invoke and run the instructions through the communication interface, to cause a device installed with the chip system to perform the method according to any one of claims 1 to 12, or to cause a device installed with the chip system to perform the method according to any one of claims 13 to 24.

51. A computer-readable storage medium, wherein the computer-readable storage medium stores computer-executable instructions, and when the computer-executable instructions are invoked by an electronic apparatus, the electronic apparatus is caused to perform the method according to any one of claims 1 to 12, or the electronic apparatus is caused to perform the method according to any one of claims 13 to 24.

52. A computer program product, comprising computer-executable instructions, wherein when the computer-executable instructions are run on a computer, the computer is caused to perform the method according to any one of claims 1 to 12, or the electronic apparatus is caused to perform the method according to any one of claims 13 to 24.
